(19) Europäisches Patentamt
European Patent Office
Office européen des brevets

(11) **EP 3 118 112 B1**

(12) **FASCICULE DE BREVET EUROPEEN**

(45) Date de publication et mention de la délivrance du brevet:
**08.11.2017 Bulletin 2017/45**

(51) Int Cl.:
**B64C 27/26** *(2006.01)* **B64C 27/82** *(2006.01)*

(21) Numéro de dépôt: **16177015.1**

(22) Date de dépôt: **29.06.2016**

(54) **AERONEF COMBINE MUNI D'UN DISPOSITIF ANTICOUPLE COMPLEMENTAIRE**

KOMBINIERTES LUFTFAHRZEUG, DAS MIT EINER ZUSÄTZLICHEN GEGENDREHMOMENTVORRICHTUNG AUSGESTATTET IST

A COMPOUND AIRCRAFT HAVING AN ADDITIONAL ANTI-TORQUE DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.07.2015 FR 1501513**

(43) Date de publication de la demande:
**18.01.2017 Bulletin 2017/03**

(73) Titulaire: **Airbus Helicopters**
**13725 Marignane Cedex (FR)**

(72) Inventeur: **TOULMAY, François**
**13127 VITROLLES (FR)**

(74) Mandataire: **GPI & Associés**
**EuroParc de Pichaury**
**Bâtiment B2 - 1er Etage**
**1330, rue Guillibert de la Lauzière**
**13856 Aix-en-Provence Cedex 3 (FR)**

(56) Documents cités:
**GB-A- 570 455          JP-A- 2003 220 999**
**US-A- 2 575 886        US-A- 4 928 907**
**US-A1- 2005 151 001    US-A1- 2006 157 614**
**US-A1- 2008 272 244**

EP 3 118 112 B1

## Description

La présente invention est du domaine des dispositifs anticouples des aéronefs à voilures tournantes et est plus particulièrement destinée à équiper les aéronefs combinés, c'est-à-dire les aéronefs comportant au moins une voilure tournante et au moins une voilure fixe.

La présente invention concerne un aéronef combiné muni d'un dispositif anticouple complémentaire. Ce dispositif anticouple complémentaire fournit un couple complémentaire qui s'ajoute au couple principal fourni par un dispositif anticouple principal équipant l'aéronef combiné afin de s'opposer au couple rotor. Ce couple rotor est dû à la réaction du rotor principal de l'aéronef au couple moteur utilisé pour mettre en rotation ce rotor principal. En effet, ce couple rotor fait tourner le fuselage de l'aéronef dans un mouvement de lacet en sens inverse de celui du rotor principal. Par suite, un dispositif anticouple principal est destiné à soumettre le fuselage de l'aéronef à un mouvement de lacet sous l'action d'un couple principal en sens identique à celui du couple moteur.

Les aéronefs à voilures tournantes sont des appareils volants qui se distinguent principalement des autres aéronefs motorisés par leur capacité à évoluer aussi bien en vol de croisière à vitesses élevées qu'en vol à basses vitesses et en vol stationnaire. Une telle capacité est procurée par l'exploitation d'au moins une voilure tournante à axe de rotation sensiblement vertical équipant l'aéronef. Une voilure tournante est située au dessus d'un fuselage de l'aéronef et est désignée par l'expression « rotor principal ». Ce rotor principal assure au moins partiellement la sustentation et la propulsion de l'aéronef.

Un aéronef à voilure tournante est généralement caractérisé par trois directions privilégiées, une direction longitudinale X s'étendant de l'avant de l'aéronef vers l'arrière de l'aéronef, une direction d'élévation Z s'étendant de bas en haut perpendiculairement à la direction longitudinale X et une direction transversale Y s'étendant de gauche à droite perpendiculairement aux directions longitudinale X et d'élévation Z.

La direction longitudinale X est l'axe de roulis de l'aéronef, la direction transversale Y est son axe de tangage et la direction d'élévation Z est son axe de lacet. L'axe de rotation du rotor principal est sensiblement proche de l'axe de lacet de l'aéronef.

Le rotor principal comporte une pluralité de pales et est entrainé en rotation par une motorisation de l'aéronef par l'intermédiaire d'une chaîne de transmission principale de puissance. Pour assurer son équilibre autour de l'axe de lacet, l'aéronef est doté d'un dispositif anticouple principal créant un couple principal autour de l'axe de lacet. Ce couple principal permet d'une part de s'opposer et d'équilibrer le couple rotor et d'autre part d'assurer la manoeuvrabilité de l'aéronef autour de son axe de lacet, notamment en vol stationnaire ou bien lors de phases de vol spécifiques.

Diverses configurations de dispositifs anticouples principaux existent pour les aéronefs à voilures tournantes.

Par exemple, un dispositif anticouple principal est constitué par un rotor auxiliaire situé généralement à l'arrière de l'aéronef, à l'extrémité d'une poutre de queue de l'aéronef. Ce rotor auxiliaire peut être fixe ou pivotant et est entrainé en rotation par la motorisation de l'aéronef par l'intermédiaire d'une chaîne de transmission auxiliaire de puissance. Un dispositif anticouple principal peut également être constitué par un jet d'air orienté principalement selon la direction transversale Y et généralement situé à l'extrémité de la poutre de queue de l'aéronef. Selon ces deux exemples, le dispositif anticouple principal crée un effort transversal au niveau de la poutre de queue de l'aéronef générant par la suite un couple principal autour de l'axe de lacet.

Selon un autre exemple, un dispositif anticouple principal est constitué par deux hélices situées transversalement de part et d'autre du fuselage de l'aéronef. Ces deux hélices sont entrainées en rotation par la motorisation de l'aéronef par l'intermédiaire d'une chaîne de transmission auxiliaire de puissance et créent des efforts longitudinaux. Ces deux hélices assurent ainsi partiellement ou totalement la propulsion de l'aéronef, selon la phase de vol de l'aéronef. Une différence entre les efforts longitudinaux créés respectivement par chaque hélice permet de générer un couple principal autour de l'axe de lacet.

Quel que soit le dispositif anticouple principal utilisé, il est nécessaire de fournir à ce dispositif anticouple principal une puissance mécanique afin de créer le couple principal requis. Cette puissance mécanique entraînant le dispositif anticouple vient s'ajouter à la puissance mécanique nécessaire pour entraîner le rotor principal. La motorisation de l'aéronef doit alors fournir une puissance mécanique suffisante pour entraîner simultanément le rotor principal et le dispositif anticouple principal.

En outre, la puissance nécessaire aussi bien au niveau du rotor principal que du dispositif anticouple principal varie selon la phase de vol. Les phases de décollage et de vol stationnaire sont généralement les phases les plus exigeantes en termes de puissance.

Par ailleurs, un aéronef à voilure tournante peut comporter au moins une voilure fixe assurant partiellement ou totalement la sustentation de l'aéronef en vol à grande vitesse. Une voilure fixe est par exemple située de part et d'autre transversalement du fuselage de l'aéronef sous le rotor principal et est désignée par la suite par le mot « aile ». Un tel aéronef à voilure tournante muni de deux ailes situées respectivement de part et d'autre du fuselage de l'aéronef est souvent désigné par l'expression « aéronef combiné ».

Avec ce type de configuration, les ailes de l'aéronef subissent l'influence aérodynamique du rotor principal. Particulièrement en vol stationnaire ou lors du décollage, lorsqu'elle se trouve totalement immergée dans le flux d'air généré en réaction à la portance du rotor principal, chaque aile subit un effort de traînée aérodynamique dirigé vers le bas qui constitue une sustentation négative appelée «déportance». Cette déportance s'oppose partiellement à la portance générée par le rotor principal et doit alors être compensée par une augmentation de la portance du rotor principal égale et opposée à cette déportance. Afin d'augmenter la portance du rotor principal, la puissance mécanique fournie par la motorisation de l'aéronef doit alors être également augmentée.

On voit que la puissance mécanique nécessaire pour un vol stationnaire d'un aéronef à voilure tournante ou bien par son décollage, déjà importante, se trouve augmentée pour un aéronef combiné. De plus, on constate que cette puissance mécanique nécessaire au vol stationnaire ou au décollage ne se limite pas à la puissance demandée par le rotor principal pour équilibrer le poids de l'aéronef, mais est doublement majorée, d'une part pour l'entraînement d'un dispositif anticouple principal et d'autre part pour compenser la déportance de chaque aile balayée par le flux d'air généré en réaction à la portance du rotor principal d'un aéronef combiné.

Par souci de simplification, on utilisera dans la suite de la description l'expression « flux d'air du rotor principal » pour désigner le flux d'air généré en réaction à la portance du rotor principal.

En conséquence, la puissance mécanique à fournir pour réaliser un vol stationnaire ainsi qu'un décollage est souvent un paramètre dimensionnant pour la motorisation de l'aéronef et limitatif pour ses performances générales. De fait, la réduction de cette puissance mécanique nécessaire pour un vol stationnaire ou bien un décollage peut être une source importante d'amélioration des performances générales de l'aéronef. Il est notamment connu qu'une réduction de la puissance nécessaire en vol stationnaire de 1,5% pour une limite de puissance motrice donnée permet une augmentation de la masse décollable totale sensiblement égale à 1% et qu'en conséquence, la charge utile de l'aéronef augmente de l'ordre de 2 à 3% pour une masse à vide de l'aéronef inchangée.

Il est tout d'abord possible de réduire le besoin de la puissance nécessaire pour assurer la fonction anticouple.

Un premier moyen consiste à utiliser, afin d'assurer la sustentation de l'aéronef, deux rotors principaux tournant en sens opposés dont les couples s'équilibrent. Aucun dispositif anticouple n'est alors nécessaire sur l'aéronef. Les deux rotors principaux peuvent être disposés transversalement sur l'aéronef, longitudinalement ou bien de façon coaxiale.

Par contre, l'utilisation de deux rotors disposés transversalement ou longitudinalement impose de relier les deux rotors par des arbres de transmission de puissance afin de synchroniser leurs mouvements en toutes circonstances. Ce type d'architecture est le plus souvent réservé à des aéronefs de forts tonnages, mais n'est donc pas approprié pour des aéronefs de moyens ou faibles tonnages.

L'utilisation de deux rotors principaux coaxiaux, bien qu'adaptée à tout type d'aéronef, est d'une grande complexité mécanique, utilisant notamment deux arbres de rotation concentriques ainsi que deux systèmes de commande de pas des pales de ces rotors principaux. De plus, les pales des deux rotors principaux ne doivent jamais interférer entre elles, quels que soient les mouvements verticaux de déformation ou de rotation qu'elles subissent, ce qui impose des critères supplémentaires d'implantation et/ou de rigidité de ces rotors principaux.

Un second moyen consiste à mettre en rotation un rotor principal unique non pas par une chaîne de transmission mécanique de puissance, mais en disposant des propulseurs d'air situés sur chacune des pales. De la sorte, le rotor principal tourne librement sur son axe sans aucun couple ou bien avec un couple très faible uniquement lié aux frottements de l'arbre du rotor principal sur des paliers. Un faible couple supplémentaire peut cependant être généré par l'entraînement d'accessoires indispensables tels que des pompes hydrauliques ou des générateurs électriques auxiliaires par exemple. De cette façon, il suffit d'un dispositif anticouple principal générant un faible couple en lacet pour équilibrer le couple résiduel du rotor principal et assurer la manoeuvrabilité en lacet de l'aéronef dans toutes les conditions de vol.

Cependant, la propulsion d'air à haute vitesse est réalisée avec un faible rendement. Par suite, malgré le besoin d'un dispositif anticouple principal générant un faible couple, la puissance demandée à la motorisation de l'aéronef est nettement augmentée afin de compenser ce faible rendement. D'autre part, le bruit très important généré par cette propulsion d'air à haute vitesse constitue un grave inconvénient de cette architecture.

Un troisième moyen consiste à doter la poutre de queue de l'aéronef d'une forme dissymétrique qui génère un effort aérodynamique transversal lorsqu'elle est balayée par le flux d'air environnant et en particulier celui du rotor principal. Cet effort aérodynamique transversal permet de créer un couple de lacet s'opposant partiellement au couple rotor.

Par contre, cette forme dissymétrique ne suffit pas à équilibrer en totalité le couple rotor, mais permet de réduire la puissance mécanique nécessaire au dispositif anticouple principal. Un dispositif anticouple principal est donc toujours nécessaire, notamment à basse vitesse. Cette forme dissymétrique peut être remplacée par un soufflage d'air sur l'un des cotés de cette poutre de queue.

Il est également possible pour les aéronefs combinés de réduire de façon connue la déportance des ailes. Dans ce but, chaque aile de l'aéronef est munie de volets mobiles, par exemple à son bord de fuite. Les volets mobiles permettent d'ajuster la portance de chaque l'ensemble formé par l'aile et le ou les volets qu'elle comporte.

On désignera dans la suite de la description par l'expression « ensemble aile et volet » l'ensemble formé par l'aile et le ou les volets qu'elle comporte pour chaque côté de la direction longitudinale X. Un ensemble aile et volet est ainsi situé d'un premier côté du fuselage de l'aéronef combiné selon la direction longitudinale X et un autre ensemble aile et volet est situé d'un second côté du fuselage selon cette direction longitudinale X.

Lorsque l'aéronef est en vol de croisière et vole à grande vitesse, chaque volet mobile est généralement positionné dans la continuité du profil d'aile avec un angle de braquage faible ou nul, optimisant ainsi la portance aérodynamique de l'aile et minimisant sa traînée aérodynamique parasite.

De plus, un déplacement dissymétrique des volets de part et d'autre du fuselage permet de réaliser un pilotage en roulis de l'aéronef. En effet, les efforts aérodynamiques de portance de l'ensemble aile et volet sont alors différents de part et d'autre du fuselage et engendrent entre autres un déplacement de l'aéronef autour de son axe de roulis.

A basse vitesse et en particulier en vol stationnaire et lors d'un décollage, les volets peuvent être orientés vers le bas, formant un angle proche de quatre vingt dix degrés (90°) avec l'aile, de façon à effacer hors du flux d'air du rotor principal la partie arrière de l'ensemble aile et volet occupé par les volets. Les volets peuvent également être coulissants et rentrer à l'intérieur de l'aile. La surface de chaque ensemble aile et volet exposé au flux d'air du rotor principal se trouve ainsi réduite, réduisant la déportance induite par l'ensemble aile et volet. En conséquence, la puissance nécessaire au niveau du rotor principal est diminuée grâce à la présence des volets mobiles, de même que la puissance demandée à la motorisation de l'aéronef. Les déplacements des volets mobiles peuvent être commandés par le pilote de l'aéronef ou éventuellement par un pilote automatique équipant cet aéronef.

Cependant, une déportance est toujours induite par le flux d'air du rotor principal sur chaque ensemble aile et volet. En effet, la taille des volets est limitée par des contraintes d'encombrement, de résistance et de masse additionnelle. En conséquence, la puissance nécessaire au niveau du rotor principal ainsi que la puissance au niveau du dispositif anticouple principal sont tout de même augmentées vis-à-vis d'un aéronef équivalent ne comportant pas d'aile.

Il est donc intéressant de proposer un moyen permettant de réduire la puissance mécanique nécessaire pour le dispositif anticouple principal afin de réduire la puissance mécanique demandée à la motorisation de l'aéronef à voilure tournante.

On connaît par exemple les documents US 2575886, US 2008/0272244, US 4928907 et GB 570455 qui décrivent un aéronef comportant un rotor de sustentation, deux ailes situées de part et d'autre d'un fuselage et éventuellement une ou deux hélices propulsives. Aucun de ces documents ne décrit un aéronef muni d'un rotor arrière anticouple. En effet, le dispositif anticouple de ces aéronefs utilise le flux d'air du rotor de sustentation qui balaye des éléments aérodynamiques afin générer des efforts aérodynamiques et par suite un couple s'opposant au couple rotor.

Ainsi, selon le document US 2575886, l'aéronef comporte une multitude de volets orientables sur chaque aile et sur le fuselage. Selon les documents US 2008/0272244, US 4928907 et GB 570455, la totalité des ailes est orientable et chaque aile comporte au moins un volet orientable par rapport à l'aile. L'orientation des volets et/ou des ailes permet alors, en étant balayés par le flux d'air du rotor de sustentation, de générer ces efforts aérodynamiques et, par suite, le couple s'opposant au couple rotor. Ces volets et/ou ces ailes peuvent être identiques de part et d'autre du fuselage.

Par ailleurs, les documents US 2006/0157614, JP 2003/220999 et US 2005/0151001 font partie de l'arrière plan technologique de l'invention.

La présente invention a alors pour objet un aéronef combiné à voilure tournante muni d'un dispositif anticouple complémentaire permettant de réduire la puissance mécanique nécessaire pour le dispositif anticouple principal et, par suite, de réduire la puissance mécanique demandée à la motorisation de l'aéronef combiné.

Selon l'invention, un aéronef combiné est défini par une direction longitudinale X s'étendant de l'avant de l'aéronef vers l'arrière de l'aéronef, une direction d'élévation Z s'étendant de bas en haut perpendiculairement à la direction longitudinale X et une direction transversale Y s'étendant de gauche à droite perpendiculairement aux directions longitudinale X et d'élévation Z.

Cet aéronef combiné comporte :

- un fuselage,
- un rotor principal situé au dessus du fuselage, muni d'une pluralité de pales et entrainé en rotation autour d'un axe sensiblement parallèle à la direction d'élévation Z,
- un dispositif anticouple principal générant un couple principal s'opposant au couple rotor généré par la rotation du rotor principal,
- au moins une aile située sous le rotor principal et s'étendant sensiblement selon la direction transversale Y, et
- au moins deux volets situés en dessous du rotor principal, au moins un volet étant situé d'un premier côté du fuselage par rapport à la direction longitudinale X et au moins un volet étant situé d'un second côté du fuselage, chaque volet s'étendant sensiblement selon la direction transversale Y, chaque volet étant lié à une aile et mobile vis-à-vis de cette aile.

Selon l'invention, chaque volet est lié soit à une aile aérodynamique commune soit à une aile aérodynamique distincte. De chaque côté du fuselage de l'aéronef combiné, chaque aile forme alors avec le ou les volets qui sont liés à elle un ensemble aile et volet.

On entend par « aile aérodynamique commune » une aile s'étendant de part et d'autre de la direction longitudinale X et étant située en dessous du fuselage de l'aéronef ou bien au dessus de ce fuselage.

On entend par « aile aérodynamique distincte » une aile fixée au fuselage de l'aéronef et s'étendant d'un seul côté de la direction longitudinale X. L'aéronef comporte alors au moins deux ailes, au moins une première aile étant située d'un premier côté de la direction longitudinale X et au moins une seconde aile étant située d'un second côté du fuselage.

De préférence, chaque volet est positionné au niveau du bord de fuite d'une aile.

Le déplacement de chaque volet est piloté par un actionneur, tel un vérin ou bien un moteur. Cet actionneur peut agir directement sur le volet ou bien de façon indirecte, par exemple par l'intermédiaire d'une tringlerie. En outre, un calculateur commande chaque actionneur afin de piloter le déplacement d'un volet.

Cet aéronef combiné est remarquable en ce que l'ensemble aile et volet situé du premier côté du fuselage et l'ensemble aile et volet étant situé du second côté du fuselage ont des coefficients aérodynamiques longitudinaux $C_T$ différents et de préférence de signes opposés lorsqu'ils sont soumis principalement au flux d'air du rotor principal. Ce flux d'air du rotor principal crée ainsi des efforts aérodynamiques longitudinaux de préférence de sens opposés sur ces ensembles aile et volet de part et d'autre du fuselage et, par suite, un couple complémentaire s'ajoutant au couple principal.

Lors des vols d'avancement de l'aéronef combiné, les ensembles aile et volet sont soumis à un flux d'air principalement orienté longitudinalement de l'avant vers l'arrière de l'aéronef et généré par l'avancement de l'aéronef. Les ensembles aile et volet, situés sous le rotor principal, sont également soumis à un flux d'air principalement orienté vers le bas et généré en réaction à la portance du rotor principal. Lors des phases de vol stationnaire et de décollage ainsi que lors des vols à basse vitesse, les ensembles aile et volet sont donc soumis principalement, voire uniquement, à ce flux d'air du rotor principal. Par ailleurs, chaque ensemble aile et volet a un profil aérodynamique générant des efforts aérodynamiques vertical et longitudinal lorsque les ensembles aile et volet sont soumis à ce flux d'air, que ce flux d'air soit généré par l'avancement de l'aéronef ou bien en réaction à la portance du rotor principal. Ces efforts aérodynamiques vertical et longitudinal générés sur chaque ensemble aile et volet sont fonction respectivement d'un coefficient aérodynamique vertical $C_N$ et d'un coefficient aérodynamique longitudinal $C_T$ de chaque ensemble aile et volet.

La convention de signe des coefficients aérodynamiques vertical $C_N$ et longitudinal $C_T$ est définie par le repère formé par les directions longitudinale X, transversale Y et d'élévation Z.

Le coefficient aérodynamique longitudinal $C_T$ de l'ensemble aile et volet est orienté selon la direction longitudinal X et est donc positif du bord d'attaque de l'aile vers le bord de fuite, c'est-à-dire de l'avant de l'aéronef vers l'arrière de l'aéronef.

Le coefficient aérodynamique vertical $C_N$ de l'ensemble aile et volet est orienté selon la direction d'élévation Z et alors positif du bas vers le haut et négatif du haut vers le bas.

Avantageusement, les coefficients aérodynamiques longitudinaux $C_T$ de chaque ensemble aile et volet sont donc selon l'invention différents et favorablement de sens opposés de part et d'autre du fuselage. De fait, l'effet prépondérant de l'invention est la création d'efforts aérodynamiques longitudinaux générés par le flux d'air du rotor principal agissant sur ces ensembles aile et volet, ces efforts aérodynamiques longitudinaux étant significativement différents et favorablement de sens opposés de part et d'autre du fuselage.

Ainsi, d'un premier côté du fuselage de l'aéronef, un premier effort aérodynamique longitudinal généré sur chaque ensemble aile et volet est dirigé favorablement vers l'arrière de l'aéronef alors que du second côté du fuselage, un second effort aérodynamique longitudinal généré sur chaque ensemble aile et volet est dirigé favorablement vers l'avant de l'aéronef. Le premier côté du fuselage pour lequel le premier effort aérodynamique longitudinal est dirigé vers l'arrière de l'aéronef est déterminé selon le sens de rotation du rotor principal de l'aéronef afin que le couple complémentaire généré par la dissymétrie entre les premier et second efforts aérodynamiques longitudinaux soit orienté dans le même sens que celui de la rotation du rotor principal et s'oppose ainsi au couple rotor.

En conséquence, un couple complémentaire autour d'un axe parallèle à la direction d'élévation Z s'ajoute au couple principal afin de s'opposer au couple rotor généré par la rotation du rotor principal de l'aéronef.

Les ensembles aile et volet ainsi que le rotor principal par l'intermédiaire du flux d'air du rotor principal constituent ainsi un dispositif anticouple complémentaire participant en complément du dispositif anticouple principal à l'équilibrage du couple rotor de l'aéronef.

De la sorte, le couple principal fourni par le dispositif anticouple principal de l'aéronef peut être réduit. De plus, ce couple complémentaire est généré à partir du flux d'air du rotor principal et est donc obtenu sans apport de puissance mécanique supplémentaire au niveau de ce rotor principal. La puissance mécanique nécessaire au niveau de ce dispositif anticouple principal est alors réduite et, par suite, le besoin de puissance mécanique au niveau de la motorisation de l'aéronef est également réduit.

De préférence, ces efforts aérodynamiques longitudinaux sont de sens opposés et ont des intensités égales de part et d'autre du fuselage de l'aéronef afin de générer ce couple complémentaire sans apparition d'effort parasite susceptible de perturber l'équilibre de l'aéronef.

Cependant, les intensités de ces efforts aérodynamiques longitudinaux peuvent être différentes de part et d'autre du fuselage de l'aéronef. Un effort longitudinal parasite correspondant à la différence entre les intensités de ces efforts aérodynamiques longitudinaux apparait alors d'un côté de l'aéronef, cet effort longitudinal parasite pouvant être dirigé vers l'avant ou vers l'arrière de l'aéronef. Cet effort longitudinal parasite doit alors être compensé par un effort aérodynamique longitudinal complémentaire généré par un basculement longitudinal du plan de rotation des pales du rotor principal afin de maintenir un vol stationnaire stable de l'aéronef, sans que cela constitue un inconvénient significatif pour l'application de l'invention.

De même, ces efforts aérodynamiques longitudinaux peuvent être de même sens, leurs intensités étant différentes. Un couple complémentaire est alors généré par la différence entre les intensités de ces efforts aérodynamiques longitudinaux et un effort longitudinal parasite apparait de part et d'autre du fuselage.

Par ailleurs, les volets peuvent être orientés différemment vis à vis du flux d'air du rotor principal de part et d'autre du fuselage afin que les coefficients aérodynamiques longitudinaux $C_T$ des ensembles aile et volet soient différents de part et d'autre du fuselage.

Dans un premier mode de réalisation de l'invention, l'aéronef combiné comporte au moins deux ailes distinctes positionnées respectivement de part et d'autre du fuselage par rapport à la direction longitudinale X et s'étendant sensiblement selon la direction transversale Y. Les ailes sont fixes vis-à-vis du fuselage de l'aéronef et placées sous le rotor principal.

Dans un second mode de réalisation de l'invention, l'aéronef combiné comporte une seule aile commune positionnée de part et d'autre du fuselage par rapport à la direction longitudinale X et s'étendant sensiblement selon la direction transversale Y. Cette aile commune est fixe vis-à-vis de l'aéronef et placée sous le rotor principal.

De façon commune à ces deux modes de réalisation de l'invention, les volets sont mobiles vis-à-vis des ailes, le déplacement des volets étant défini par un angle de braquage. Les profils aérodynamiques des ailes sont identiques de part et d'autre du fuselage de même que les profils aérodynamiques des volets.

De façon connue, les volets peuvent être braqués vis-à-vis des ailes, modifiant ainsi les coefficients aérodynamiques longitudinal $C_T$ et vertical $C_N$ des ensemble aile et volet. Ainsi en vol de croisière, chaque volet est généralement positionné dans la continuité de l'aile avec un angle de braquage sensiblement nul.

A basse vitesse et en particulier en vol stationnaire ou lors d'une phase de décollage, les volets peuvent être positionnés vers le bas avec un angle de braquage proche de quatre vingt dix degrés (90°) de façon à réduire la déportance de chaque ensemble aile et volet.

Selon l'invention, lors des phases de vol stationnaire et de décollage, des angles de braquage dissymétriques des volets de part et d'autre du fuselage permettent de générer sur les ensembles aile et volet de part et d'autre du fuselage des efforts aérodynamiques longitudinaux différents et favorablement de sens opposés. Par suite, un couple complémentaire s'ajoutant au couple principal est formé par ces efforts aérodynamiques longitudinaux. Les angles de braquage des volets sont différents de part et d'autre du fuselage, mais proche de 90° de façon à d'une part réduire au maximum la déportance de chaque ensemble aile et volet et d'autre part générer ce couple complémentaire.

Avantageusement, ce couple complémentaire participant partiellement à équilibrer le couple rotor est ainsi obtenu sans affecter l'efficacité des ensembles aile et volet, notamment dans leur fonction de réduction de la déportance, ni augmenter la complexité, la masse ou le coût de l'aéronef, les volets et leurs mécanismes de déplacement étant inchangés. En conséquence, la motorisation de l'aéronef peut alors être optimisée en tenant compte de ce couple complémentaire.

Il est à noter que l'efficacité du dispositif anticouple complémentaire et de la réduction de la déportance des ensembles aile et volet est directement liée à la surface des volets. Par exemple, des volets dont les longueurs de corde sont inférieures à 20% de la longueur de corde de l'aile n'apportent qu'une très faible réduction de cette déportance et du couple principal, ne justifiant pas la présence des volets et de leurs mécanismes de déplacement. A l'inverse, des volets de très grande taille sont certes très efficaces aussi bien pour générer un couple complémentaire que pour réduire cette déportance, mais les contraintes liées à leur encombrement, aux mécanismes nécessaires à leurs déplacements et aux efforts induits les rendent globalement peu intéressants en comparaison à d'autres dispositifs tels que, par exemple, une aile pivotante dans sa totalité.

En conséquence et afin d'obtenir un compromis intéressant entre l'efficacité des volets et leurs contraintes d'implantation, la longueur de corde de chaque volet est comprise entre 20 et 35 % de la longueur de corde des ailes.

De plus et afin de maximiser la réduction de la déportance des ensembles aile et volet, la dimension couverte par les volets dans le sens de l'envergure de l'aile, c'est-à-dire selon la direction transversale Y, doit être maximale. Par exemple, les volets s'étendent de la paroi du fuselage jusqu'à l'extrémité de l'aile ou bien jusqu'à la limite extérieure du flux d'air du rotor principal, si celui-ci ne couvre pas la totalité de la surface de l'aile.

Par ailleurs pour des surfaces d'ailes et de volets données, afin d'optimiser l'efficacité du dispositif anticouple complémentaire, les bras de levier des efforts aérodynamiques longitudinaux dissymétriques doivent être maximum. Dans ce but, les volets doivent être éloignés le plus possible du fuselage de l'aéronef.

Cependant, si au moins une hélice propulsive est située sur une aile, le flux d'air sensiblement longitudinal de chaque hélice propulsive est dirigé sur une partie de l'aile. Dans ce cas, les volets doivent être positionnés sur chaque aile hors d'une zone affectée par ce flux d'air sensiblement longitudinal d'une hélice propulsive. En effet, le braquage d'un volet situé dans une telle zone de l'aile balayée par le flux d'air de l'hélice propulsive génère un autre effort longitudinal dirigé vers l'arrière de l'aéronef, s'opposant alors à l'effort de propulsion généré par l'hélice propulsive et réduisant son efficacité. De plus, cet autre effort longitudinal réduit également l'efficacité du dispositif anticouple principal que peut former la ou les hélice(s) propulsive(s). Lorsque l'aéronef est en vol stationnaire ou à très basse vitesse, il est également possible de ne pas braquer les volets situés dans la zone affectée par le flux d'air de chaque hélice propulsive et cela si plusieurs volets sont disposés d'une part sur l'aile située du premier côté du fuselage de l'aéronef et d'autre part sur l'aile située du second côté du fuselage.

De préférence, l'aéronef comporte dans ce cas une hélice propulsive positionnée sur chaque aile, les hélices propulsives constituant le dispositif anticouple principal de l'aéronef combiné.

Au cours d'un vol stationnaire, d'un décollage ou bien d'un vol à très basse vitesse, lorsque l'angle de braquage des volets est faible et orienté vers le bas selon la direction d'élévation Z, l'intensité de la déportance de chaque ensemble aile et volet est importante consécutivement d'une part au décollement généralisée de l'écoulement d'air sur toute la surface de l'intrados de l'ensemble aile et volet mettant cette surface en dépression et d'autre part à la surpression générée sur toute la surface de l'extrados de cet ensemble aile et volet.

Par contre, l'effort aérodynamique longitudinal généré sur chaque ensemble aile et volet est faible et dirigé vers le bord d'attaque de l'aile, c'est-à-dire vers l'avant de l'aéronef, voire sensiblement nul. Cet effort aérodynamique longitudinal est proportionnel au coefficient aérodynamique longitudinal $C_T$ et donc négatif, conformément à la convention de signe définie auparavant et relative aux coefficients aérodynamiques vertical $C_N$ et longitudinal $C_T$.

Lorsque l'angle de braquage des volets augmente progressivement vers le bas selon la direction d'élévation Z, l'intensité de la déportance de chaque ensemble aile et volet diminue alors que l'intensité de l'effort aérodynamique longitudinal généré sur chaque ensemble aile et volet augmente, cet effort aérodynamique longitudinal généré étant négatif et dirigé vers le bord d'attaque de l'aile.

L'effort aérodynamique longitudinal atteint ensuite une valeur d'intensité maximale, cet effort aérodynamique longitudinal étant toujours négatif et dirigé vers le bord d'attaque de l'aile, puis son intensité diminue alors que l'angle de braquage des volets continue d'augmenter.

Lorsque l'angle de braquage a augmenté fortement et approche ou bien dépasse légèrement un angle de 90°, l'intensité de la déportance est égale à une valeur minimum ou très proche de cette valeur minimum. Ensuite, cette intensité de la déportance ne varie pratiquement plus, même si l'angle de braquage des volets continue d'augmenter.

Par contre, l'intensité de l'effort aérodynamique longitudinal sur chaque ensemble aile et volet diminue lorsque l'angle de braquage des volets continue d'augmenter pour devenir nulle pour un angle de braquage d'inversion $\delta_i$. Au-delà de cet angle de braquage d'inversion $\delta_i$, l'intensité de l'effort aérodynamique longitudinal sur chaque ensemble aile et volet augmente rapidement alors que le sens de cet effort aérodynamique longitudinal est inversé et orienté vers le bord de fuite de l'aile, c'est-à-dire vers l'arrière de l'aéronef lorsque l'angle de braquage continue d'augmenter : l'effort aérodynamique longitudinal évolue donc rapidement et est positif dans cette zone.

Ensuite, au delà d'un angle de braquage de décrochage $\delta_D$ qui est généralement proche de 90°, l'écoulement du flux d'air décolle brutalement de la surface du volet et l'intensité de l'effort aérodynamique longitudinal chute brutalement et est alors proche de zéro. L'intensité de l'effort aérodynamique longitudinal n'évolue alors plus même si l'angle de braquage continue d'augmenter au-delà de cet angle de braquage de décrochage $\delta_D$. Il s'agit d'un phénomène de décrochage aérodynamique du volet. La valeur de l'angle de braquage de décrochage $\delta_D$ dépend de la forme du profil aérodynamique de l'ensemble aile et volet ainsi que de la jonction du volet avec l'aile et peut être inférieure, égale ou bien supérieure à 90°.

Le principe de l'invention consiste donc à appliquer un angle de braquage dissymétrique des volets de part et d'autre du fuselage. Un premier angle de braquage $\delta_1$ de chaque volet d'un premier côté du fuselage est proche autant que possible de l'angle de braquage de décrochage $\delta_D$ sans l'atteindre, et donc supérieur à l'angle de braquage d'inversion $\delta_i$. Un second angle de braquage $\delta_2$ de chaque volet du second côté du fuselage est inférieur à l'angle de braquage d'inversion $\delta_i$. Ce second angle de braquage $\delta_2$ est par exemple symétrique par rapport à l'angle de braquage d'inversion $\delta_i$ du premier angle de braquage $\delta_1$.

Le dispositif anticouple complémentaire permet ainsi d'utiliser un premier angle de braquage $\delta_1$ pour lequel la variation du coefficient aérodynamique longitudinal $C_T$ de l'ensemble aile et volet est rapide et pour lequel l'intensité de la déportance est proche de sa valeur minimale. Le premier effort aérodynamique longitudinal apparaissant sur chaque ensemble aile et volet situé de ce premier côté du fuselage est alors positif et dirigé vers le bord de fuite de l'aile, c'est-à-dire vers l'arrière de l'aéronef. Le second effort aérodynamique longitudinal apparaissant sur chaque l'ensemble aile et volet situé de ce second côté du fuselage est alors négatif et dirigé vers le bord d'attaque de l'aile, c'est-à-dire vers l'avant de l'aéronef.

On peut ainsi définir les premier et second angles de braquage $\delta_1$, $\delta_2$ de part et d'autre du fuselage de

la façon suivante, $\delta_1 = \delta_m + \dfrac{\Delta\delta_1}{2}$ et

$\delta_2 = \delta_m - \dfrac{\Delta\delta_1}{2}$, $\delta_m$ étant la moyenne arithmétique des angles de braquage de part et d'autre du fuselage et $\Delta\delta_1$ étant la différence de ces angles de braquage. La différence des angles de braquage $\Delta\delta_1$ est par exemple comprise entre 10 à 15°.

Le premier côté du fuselage pour lequel le premier angle de braquage $\delta_1$ de chaque volet est proche de l'angle de braquage de décrochage $\delta_D$ est déterminé selon le sens de rotation du rotor principal de l'aéronef afin que le couple complémentaire généré par ces efforts aérodynamiques longitudinaux s'oppose au couple rotor. De plus, afin d'obtenir un couple complémentaire maximum, on détermine l'angle de braquage maximal à réaliser de ce premier coté du fuselage où doit être créé le premier effort aérodynamique longitudinal dirigé vers l'arrière de l'aéronef, en conservant une marge de sécurité $\Delta\delta_0$ vis-à-vis de l'angle de braquage de décrochage $\delta_D$. Cette marge de sécurité $\Delta\delta_0$ en étant non nulle permet d'éviter que le premier effort aérodynamique longitudinal soit nul ou très faible et, par suite, qu'aucun couple complémentaire significatif ne soit généré.

Cette marge de sécurité $\Delta\delta_0$ est par exemple comprise entre 2 et 5°. On peut ainsi définir les premier et second angles de braquage de part et d'autre du fuselage tels que $\delta_1 = \delta_D - \Delta\delta_D$ et $\delta_2 = \delta_1 - \Delta\delta_1$.

De plus, afin d'éviter que l'angle de braquage d'un volet atteigne cet angle de braquage de décrochage $\delta_D$, une première butée mécanique peut être installée sur le premier côté du fuselage afin de limiter le déplacement des volets. L'écart angulaire entre l'angle de braquage de décrochage $\delta_D$ et la première butée mécanique est par exemple égal à la marge de sécurité $\Delta\delta_0$. De même, une seconde butée mécanique peut également être installée sur le second côté du fuselage. L'écart angulaire entre les angles de braquage des volets correspondant aux première et seconde butées mécaniques est par exemple égal à la différence des angles de braquage $\Delta\delta_1$. De cette façon, lorsque les volets des deux cotés du fuselage sont braqués jusqu'à leurs butées respectives, on réalise de façon fiable et sûre l'écart de braquage souhaité pour assurer le couple complémentaire, ce couple complémentaire étant avantageusement maximum.

L'efficacité du dispositif complémentaire anticouple est influencée, outre par les dimensions et l'implantation des volets, par la forme de la jonction entre l'aile et le volet notamment. En effet, une zone d'aspiration d'air peut apparaître sur la partie convexe de chaque volet au niveau de cette jonction avec l'aile, au voisinage des angles de braquage élevés. Dans ce but, le rayon de courbure de cette partie convexe du volet doit être le plus grand possible et la continuité aérodynamique avec la partie fixe de l'aile doit être la meilleure possible, sans apparition de cassure de sa surface, ni de jeu excessif, ni de fuite d'air entre l'extrados et l'intrados du volet. Toutefois, le volet ne devra pas détériorer la performance du profil de l'aile aux faibles incidences lorsque le volet n'est pas braqué ou bien est braqué d'un angle faible, tel qu'il est positionné en vol à grande vitesse.

De plus, un grand rayon de courbure de cette partie convexe du volet permet avantageusement d'augmenter la valeur de l'angle de braquage de décrochage $\delta_D$ de l'ensemble aile et volet soumis au flux d'air du rotor principal et d'augmenter ainsi la marge de sécurité $\Delta\delta_0$. En conséquence, la différence des angles de braquage $\Delta\delta_1$ peut être plus importante permettant d'augmenter l'intensité de l'effort aérodynamique longitudinal positif et, par suite, le couple complémentaire.

Si par exemple, chaque volet a un mouvement de rotation simple vis-à-vis de l'aile, il est possible d'obtenir un grand rayon de courbure de cette partie convexe des volets en éloignant le centre de rotation du volet par rapport à l'extrados de l'aile et de l'extrados du volet. Ce centre de rotation est par exemple situé à l'intérieur de l'aile et proche de l'intrados de l'aile. La surface convexe du volet qui apparaît lors de son braquage est alors de forme cylindrique avec un rayon de courbure légèrement inférieur à l'épaisseur de l'aile au niveau de sa jonction avec le volet.

On comprend donc que l'efficacité du dispositif anticouple complémentaire dépend de nombreux paramètres liés à l'architecture générale de l'aéronef, aux dimensions et à la forme de l'aile et des volets, à la cinématique de déplacement des volets, au contrôle du passage de l'air dans l'espace séparant les volets et l'aile correspondante. Avec un choix favorable de ces paramètres, le couple complémentaire obtenu par le braquage différentiel des volets peut atteindre de 2 à 4% du couple principal dans les cas de vol stationnaire où l'intensité de ce couple principal est la plus importante, sans affecter la réduction de la déportance de l'ensemble aile et volet obtenue par le braquage de ces volets qui est de l'ordre de 10 à 15%. En conséquence, la présence des volets et leur braquage dissymétrique peut permettre de compenser entre 10 et 25% de la valeur du surcouple du rotor principal généré par la déportance de l'ensemble aile et volet en vol stationnaire, suivant la configuration de l'aile et des volets.

Par ailleurs, il est intéressant de noter qu'une composante de la vitesse tangentielle du flux d'air du rotor principal, qui résulte de la rotation du rotor principal, tend à induire une dissymétrie de ce flux d'air sur les volets braqués de part et d'autre du fuselage. Cette dissymétrie de ce flux d'air sur les volets contribue à créer un couple supplémentaire qui vient augmenter le couple du dispositif anticouple complémentaire afin de s'opposer au couple rotor.

En outre, le déplacement des volets peut être commandé selon plusieurs configurations afin de générer l'apparition du couple complémentaire.

Selon une première configuration, les volets de part et d'autre du fuselage utilisent le même système de commande qui réalise le braquage des volets de façon collective selon une seule consigne de braquage. Par suite, les volets ne sont pas utilisés de façon dissymétrique, excepté lorsque ces consignes de braquage ont une valeur supérieure à la première butée ou bien une valeur supérieure ou égale à la seconde butée. En effet, lorsque la consigne de braquage se situe hors du domaine limité respectivement par la première butée et/ou par la seconde butée, en particulier lors de vol stationnaire ou à très basse vitesse afin de limiter la déportance des ensembles aile et volet, les volets sont bloqués respectivement par cette première ou bien cette seconde butée. Par suite, les angles de braquage des volets sont différents de part et d'autre du fuselage de l'aéronef et un couple complémentaire est généré comme décrit précédemment.

Selon une seconde configuration, les volets de part et d'autre du fuselage comportent leur propre de système de commande qui réalise le braquage des volets de façon individuelle de part et d'autre du fuselage selon une ou plusieurs consignes de braquage.

Selon un premier mode de fonctionnement symétrique, les consignes de braquage sont identiques de part et d'autre du fuselage de l'aéronef. En conséquence, le fonctionnement de cette seconde configuration est alors identique à la première configuration, un couple complémentaire étant généré lorsque la consigne de braquage est supérieure à la première butée ou bien supérieure ou égale à la seconde butée.

Selon un second mode de fonctionnement dissymétrique, les consignes de braquage peuvent être différentes de part et d'autre du fuselage de l'aéronef. Les volets peuvent être utilisés de façon dissymétrique notamment afin d'assurer par exemple une fonction de commande ou d'équilibrage en roulis de l'aéronef volant à grande vitesse avec de faibles angles de braquage des volets. En conséquence, lors d'un vol stationnaire ou à très basse vitesse, les consignes de braquage ont des valeurs différentes et importantes afin d'un part de limiter la déportance des ensembles aile et volet et d'autre part de générer le couple complémentaire. De plus, lorsque les consignes de braquage se situent hors du domaine limité respectivement par la première butée et/ou par la seconde butée, les volets sont bloqués respectivement par cette première et/ou cette seconde butée. Par suite, les angles de braquage des volets sont différents de part et d'autre du fuselage de l'aéronef et le couple complémentaire est généré.

Quelle que soit la configuration de commande des volets, la consigne de braquage est déterminée par le pilote de l'aéronef ou bien par un pilote automatique présent dans l'aéronef.

En outre, quelle que soit la configuration de commande des volets, le couple complémentaire est avantageusement généré sans aucune complexification de l'implantation ou de la commande des volets, ni augmentation de la masse de l'aéronef combiné, ni coût additionnel.

Par ailleurs, les systèmes de commande des volets doivent être conçus pour garantir une très haute fiabilité de fonctionnement en vol, c'est-à-dire assurant une probabilité de défaillance extrêmement faible. En effet, si la position d'un des volets se bloquait autrement que sur une butée ou s'écartait fortement de sa consigne de braquage, les efforts aérodynamiques longitudinaux pourraient être extrêmement déséquilibrés de part et d'autre du fuselage et ainsi mettre en danger la structure de l'aéronef et/ou le contrôle de son vol.

S'il n'est pas possible de garantir une très haute fiabilité de fonctionnement, chaque système de commande des volets doit, au minimum, être capable de reconnaître et de signaler une défaillance de façon extrêmement sûre. Chaque système de commande des volets doit de plus offrir la possibilité de bloquer très rapidement le mouvement d'un volet dans sa position instantanée lorsque sa défaillance est détectée. Afin de ne pas créer de dissymétrie d'angle de braquage des volets potentiellement dangereuse, le blocage en position des volets est actionné simultanément sur les deux systèmes de commande en cas de signalement de défaillance sur l'un quelconque des deux systèmes. Le blocage en position des volets n'est pas considéré comme un événement grave ou catastrophique sur un aéronef combiné car il est toujours possible de voler dans un domaine de vol limité et d'atterrir en sécurité quelle que soit la position des volets lorsqu'ils sont bloqués, sous réserve que les positions de blocage n'induisent pas un trop fort déséquilibre des efforts aérodynamiques longitudinaux.

La présente invention a également pour objet un procédé de génération d'un couple complémentaire pour un aéronef combiné, cet aéronef étant situé dans un repère constitué par une direction longitudinale X s'étendant de l'avant de l'aéronef vers l'arrière de l'aéronef, une direction d'élévation Z s'étendant de bas en haut perpendiculairement à ladite direction longitudinale X et une direction transversale Y s'étendant de gauche à droite perpendiculairement auxdites directions longitudinale X et d'élévation Z. Cet aéronef comporte :

- un fuselage,
- un rotor principal situé au dessus du fuselage, muni d'une pluralité de pales et entraîné en rotation autour d'un axe sensiblement parallèle à la direction d'élévation Z et qui sustente l'aéronef grâce à la portance aérodynamique des pales,
- un dispositif anticouple principal générant un couple principal s'opposant au couple rotor $C_R$ généré suite à la rotation du rotor principal,
- au moins une aile située en dessous du rotor principal et s'étendant sensiblement selon la direction transversale Y, et
- au moins deux volets situé en dessous du rotor principal au moins un volet étant situé d'un premier côté du fuselage par rapport à la direction longitudinale X, au moins un volet étant situé d'un second côté du fuselage par rapport à la direction longitudinale X, chaque volet s'étendant sensiblement selon la direction transversale Y, chaque volet étant lié à une aile et mobile vis-à-vis de cette aile, chaque aile formant avec le ou les volets qui sont liés à elle un ensemble aile et volet de chaque côté du fuselage.

Les ensembles aile et volet génèrent des efforts aérodynamiques longitudinaux $F_1, F_2$ dirigés selon la direction longitudinale X de part et d'autre du fuselage sous l'effet du flux d'air généré en réaction à la portance aérodynamique du rotor principal et, par suite, génèrent un couple complémentaire s'ajoutant au couple principal afin de s'opposer au couple rotor $C_R$, lesdits ensembles aile et volet ayant des profils aérodynamiques identiques et les volets étant orientés de façon dissymétrique vis à vis du flux d'air généré en réaction à la portance aérodynamique du rotor principal de part et d'autre du fuselage afin que les coefficients aérodynamiques longitudinaux $C_T$ des profils aérodynamiques soient différents de part et d'autre du fuselage.

Ce procédé comporte les étapes suivantes :

- une étape de définition d'un angle de braquage pour le déplacement de chaque volet, un premier angle de braquage $\delta_1$ de chaque volet situé d'un premier côté du fuselage étant supérieur à un angle de braquage d'inversion $\delta_i$ et inférieur à un angle de braquage de décrochage $\delta_D$ alors qu'un second angle de braquage $\delta_2$ de chaque volet situé d'un second côté du fuselage est inférieur à cet angle de braquage d'inversion $\delta_i$, le coefficient aérodynamique longitudinal $C_T$ de chaque ensemble aile et volet étant nul pour un angle de braquage des volets égal à cet angle de braquage d'inversion $\delta_i$, l'angle de braquage de décrochage $\delta_D$ correspondant à un décrochage aérodynamique de chaque volet et
- une étape de déplacement de chaque volet respectivement selon l'angle de braquage $\delta_1$, $\delta_2$.

De plus, au cours de l'étape de définition d'un angle de braquage de ce procédé, on définit le premier angle de braquage $\delta_1$ avec une marge de sécurité $\Delta\delta_0$ non nulle vis-à-vis de l'angle de braquage de décrochage $\delta_D$ et on définit le second angle de braquage $\delta_2$ avec une différence des angles de braquage $\Delta\delta_1$ vis-à-vis du premier angle de braquage $\delta_1$ tels que $\delta_1 = \delta_D - \Delta\delta_0$ et $\delta_2 = \delta_1 - \Delta\delta_1$.

L'invention et ses avantages apparaîtront avec plus de détails dans le cadre de la description qui suit avec des exemples de réalisation donnés à titre illustratif en référence aux figures annexées qui représentent :

- les figures 1 et 2, deux modes de réalisation d'un aéronef combiné selon l'invention,
- les figures 3 et 4, deux vues de dessus de deux aéronefs combinés selon l'invention,
- la figure 5, un graphique représentant la variation du coefficient aérodynamique longitudinal $C_T$ d'un ensemble aile et volet, et
- la figure 6, deux vues de détail d'un ensemble aile et volet.

Les éléments présents dans plusieurs figures distinctes sont affectés d'une seule et même référence.

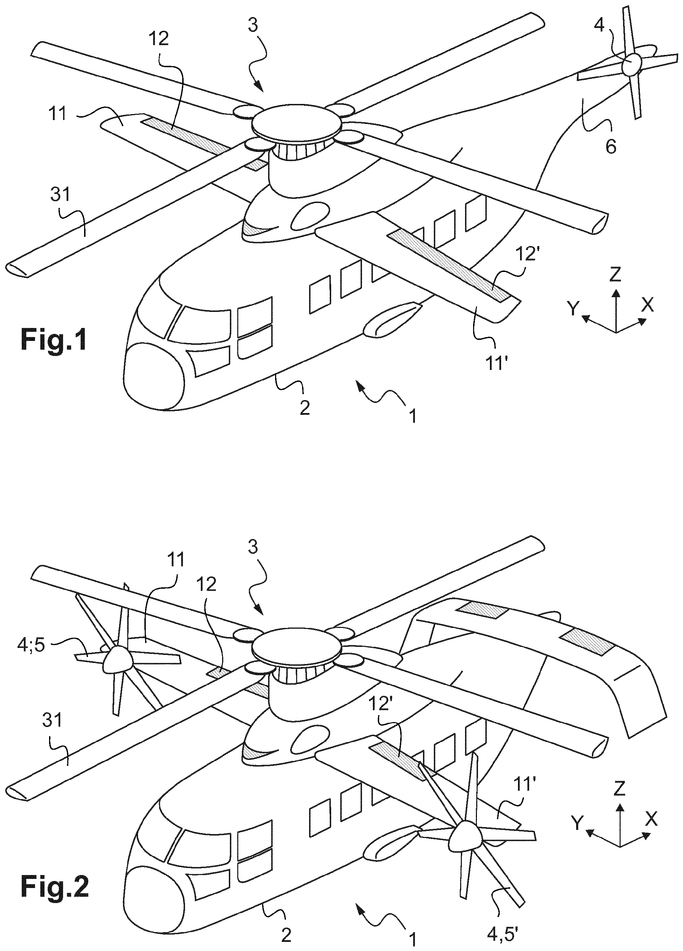

Sur les figures 1 et 2, il est représenté un aéronef combiné 1 comprenant un fuselage 2, un rotor principal 3 positionné au-dessus du fuselage 2, deux ailes 11,11' munies respectivement d'un volet 12,12' et un dispositif anticouple principal 4.

De plus, un repère X,Y,Z est attaché à cet aéronef 1. La direction longitudinale X s'étend de l'avant de l'aéronef 1 vers l'arrière de l'aéronef 1, la direction d'élévation Z s'étend de bas en haut perpendiculairement à la direction longitudinale X, la direction transversale Y s'étendant de gauche droite à perpendiculairement aux directions longitudinale X et d'élévation Z.

La direction longitudinale X est l'axe de roulis de l'aéronef 1, la direction transversale Y est son axe de tangage et la direction d'élévation Z est son axe de lacet.

Le rotor principal 3 a un axe de rotation sensiblement vertical, c'est-à-dire sensiblement parallèle à la direction d'élévation Z, et est muni de quatre pales principales 31. Le rotor principal 3 assure la propulsion voire la sustentation de l'aéronef 1.

Une aile 11,11' est située de chaque côté du fuselage 2, en dessous du rotor principal 3. L'envergure de chaque aile 11,11' est selon la direction transversale Y et sa corde est selon la direction longitudinale X. Chaque aile 11,11' comporte classiquement une surface d'intrados et une surface d'extrados. Un volet 12,12' mobile est positionné au bord de fuite de chaque aile 11, 11'.

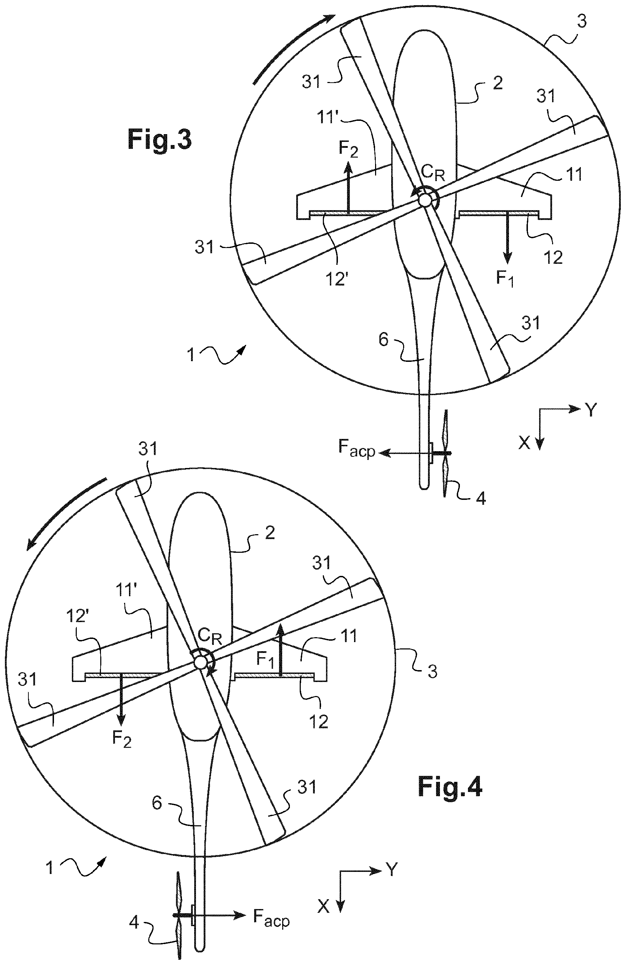

Selon un premier mode de réalisation de l'aéronef combiné 1 représenté sur la figure 1, le dispositif anticouple principal 4 est constitué par un rotor arrière positionné à l'extrémité arrière d'une poutre de queue 6 de l'aéronef 1. L'axe de rotation de ce rotor arrière est sensiblement horizontal et parallèle à la direction transversale Y. Selon ce premier mode de réalisation de l'aéronef 1, chaque volet 12,12' s'étend sur l'essentiel de l'envergure de l'aile 11,11' afin de maximiser son effet. Deux aéronefs combinés 1 selon ce premier mode de réalisation selon l'invention sont également représentés sur les figures 3 et 4 en vue de dessus.

Selon un second mode de réalisation de l'aéronef combiné 1 représenté sur la figure 2, le dispositif anticouple principal 4 est constitué par deux hélices propulsives 5,5' positionnées respectivement sur une aile 11,11'. L'axe de rotation de chaque hélice propulsive 5,5' est sensiblement horizontal et parallèle à la direction longitudinale X. Selon ce second mode de réalisation de l'aéronef 1, chaque volet 12,12' n'est pas présent dans la zone balayée par le souffle de chaque hélice propulsive 5,5' afin de ne pas s'opposer aux effets de cette hélice propulsive 5,5'.

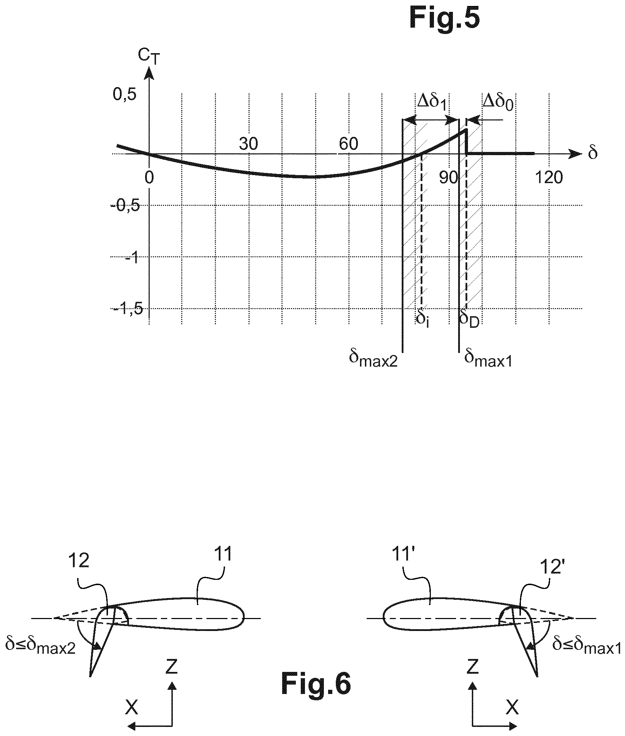

Quel que soit le mode de réalisation, chaque volet 12,12' est mobile en rotation par rapport respectivement à l'aile 11, 11' sur laquelle il est implanté, comme représenté sur la figure 6. On considère qu'un volet 12,12' a un angle de braquage $\delta$ nul lorsque la corde de ce volet 12,12' est dans la continuité de la corde de l'aile 11,11'. Cet angle de braquage $\delta$ est ensuite formé par l'angle entre la position actuelle du volet 12,12' et sa position dans la continuité de l'aile 11,11' comme indiqué sur cette figure 6.

En vol de croisière, l'angle de braquage $\delta$ des volets 12,12' est faible et il permet de régler la portance aérodynamique de l'aile 11,11'. L'effort aérodynamique longitudinal de l'aile 11,11' reste faible et sensiblement symétrique pour un flux d'air ayant une incidence elle-même faible vis-à-vis de l'aile 11,11', c'est-à-dire pour un flux d'air en amont de l'aile 11,11' sensiblement parallèle à la direction longitudinale X.

En revanche, lorsque l'aéronef 1 est en vol stationnaire, en phase de décollage ou bien qu'il vole à très basse vitesse, le flux d'air balayant l'aile 11,11' parallèlement à la direction longitudinale X est faible voire inexistant. Par contre, sous l'effet de de la réaction à la portance du rotor principal 3, un flux d'air en amont de l'aile 11,11' est sensiblement parallèle à la direction d'élévation Z. Ce flux d'air est orienté du haut vers le bas et atteint donc en premier la surface d'extrados de l'aile 11,11'. L'incidence de ce flux d'air vis-à-vis de l'aile 11,11' est alors de l'ordre de -90°, d'après la convention usuelle selon laquelle l'incidence est comptée positive lorsque le flux d'air attaque l'aile 11, 11' par la surface de l'intrados, et négative lorsque qu'il attaque l'aile 11,11' par la surface de l'extrados.

Par suite, le décollement généralisé de l'écoulement de ce flux d'air, qui s'amorce d'une part au bord avant de l'aile 11,11' et d'autre part, au bord arrière d'un volet 12,12', met la surface de l'intrados en dépression et la surface de l'extrados en surpression. En conséquence, un effort aérodynamique de déportance selon la direction d'élévation Z et dirigée vers le bas, donc s'opposant à la portance générée par le rotor principal 3, apparait au niveau de chaque ensemble aile 11,11' et volet 12,12' ainsi qu'un effort aérodynamique longitudinal selon la direction longitudinale X.

Les volets 12,12' lorsqu'ils sont déplacés avec un angle de braquage $\delta$ proche de 90° permettent de réduire notamment la surface du profil de l'extrados de l'ensemble aile 11,11' et volet 12,12' soumis à ce flux d'air du rotor principal 3 et, par suite, l'intensité de sa déportance. Cet effort aérodynamique vertical, considéré dans chaque section élémentaire normale à la direction transversale Y de l'ensemble aile 11, 11' et volet 12,12' et soumise au flux d'air est notamment proportionnel à un coefficient aérodynamique vertical ou encore dit normal $C_N$.

Le déplacement des volets 12,12' permet également de modifier l'effort aérodynamique longitudinal considéré dans cette même section de l'ensemble aile 11, 11' et volet 12,12'. Cet effort aérodynamique longitudinal est notamment proportionnel au coefficient aérodynamique longitudinal ou encore dit tangentiel $C_T$. L'évolution de ce coefficient aérodynamique longitudinal $C_T$ pour une incidence du flux d'air de -90°, c'est-à-dire correspondant au flux d'air du rotor principal 3, est représentée sur la figure 5 en fonction de l'angle de braquage $\delta$ d'un volet 12,12'.

On constate que ce coefficient aérodynamique longitudinal $C_T$ est négatif pour un angle de braquage $\delta$ du volet 12,12' compris entre les valeurs 0 et $\delta_i$, nul pour un angle de braquage d'inversion $\delta_i$ et positif pour un angle de braquage $\delta$ compris entre les valeurs $\delta_i$ et $\delta_D$.

Cette variation du coefficient aérodynamique longitudinal $C_T$ de l'ensemble aile 11, 11' et volet 12,12' et, par suite, de l'effort aérodynamique longitudinal résulte notamment de la variation de l'amplitude et de la direction de la surpression s'exerçant sur l'extrados du volet 12,12' et sur la surface convexe qui assure la jonction entre le volet 12,12' et l'aile 11, 11', consécutivement à l'augmentation de l'angle de braquage $\delta$ du volet 12,12'.

A l'approche de l'angle de braquage d'inversion $\delta_i$, l'écoulement du flux d'air sur la partie convexe à l'extrados du volet 12,12' continue de s'accélérer avec une diminution concomitante de la pression, selon la relation de Bernoulli, ce qui a pour effet d'inverser le signe du coefficient aérodynamique longitudinal $C_T$ au passage de cet angle de braquage d'inversion $\delta_i$ et, par suite, d'inverser le sens de l'effort aérodynamique longitudinal apparaissant sur chaque ensemble aile 11,11' et volet 12, 12'.

De plus, un décrochage aérodynamique du volet 12,12' se produit pour l'angle de braquage de décrochage $\delta_D$ qui a pour effet un décollement brutal de l'écoulement du flux d'air de la surface du volet 12,12' et, par suite, une chute du coefficient aérodynamique longitudinal $C_T$. On constate également que la variation du coefficient aérodynamique longitudinal $C_T$ est très rapide pour des valeurs d'angle de braquage précédant immédiatement l'angle de braquage de décrochage $\delta_D$.

De fait, en positionnant les volets 12,12' de part et d'autre du fuselage 2 avec respectivement un angle de braquage supérieur et inférieur à l'angle de braquage d'inversion $\delta_i$, les deux l'ensembles aile 11, 11' et volet 12,12' ont des coefficients aérodynamiques longitudinaux $C_T$ différents et de signes opposés et, par suite, des efforts aérodynamiques longitudinaux $F_1, F_2$ différents et de sens opposés. Ces efforts aérodynamiques longitudinaux $F_1, F_2$ étant de signe opposés et situé de part et d'autre du fuselage 2 permettent de créer le couple complémentaire recherché autour de l'axe de rotation du rotor principal 3, ce couple complémentaire s'ajoutant au couple principal du dispositif anticouple principal 4 afin d'équilibrer le couple rotor $C_R$ du rotor principal 3 de l'aéronef combiné 1.

Cependant, l'angle de braquage $\delta$ des volets 12,12' ne doit pas atteindre l'angle de braquage de décrochage $\delta_D$ afin d'éviter que une perte brutale du couple complémentaire recherché. Dans ce but, une première butée mécanique correspondant à un premier angle de braquage maximum $\delta_{max1}$ peut être installée sur une première aile 11 située d'un premier côté du fuselage 2. Ce premier angle de braquage maximum $\delta_{max1}$ doit donc être strictement inférieur à l'angle de braquage de décrochage $\delta_D$. Une marge de sécurité $\Delta\delta_0$ est donc utilisée entre le premier angle de braquage maximum $\delta_{max1}$ et

l'angle de braquage de décrochage $\delta_D$. Cette marge de sécurité $\Delta\delta_0$ est par exemple comprise entre 2 et 5°.

De plus, afin que les intensités des deux efforts aérodynamiques longitudinaux $F_1,F_2$ soit suffisantes pour générer un couple complémentaire significatif, une différence des angles de braquage $\Delta\delta_1$ doit être maintenue entre les angles de braquage des volets 12,12' de part et d'autre du fuselage 2. Dans ce but, une seconde butée mécanique peut être installée sur une seconde aile 11' située d'un second côté du fuselage 2, cette seconde butée mécanique correspondant à un second angle de braquage maximum 5maux2. Ce second angle de braquage maximum $\delta_{max2}$ est strictement inférieur au premier angle de braquage maximum $\delta_{max1}$, la différence entre le premier angle de braquage maximum $\delta_{max1}$ et le second angle de braquage maximum $\delta_{max2}$ correspond à la différence des angles de braquage $\Delta\delta$, par exemple comprise entre 10 et 15°.

Avantageusement, l'utilisation de la première et la seconde butées permet d'utiliser au mieux la zone à fort gradient du coefficient aérodynamique longitudinal $C_T$ de chaque volet 12,12', tel que représenté sur le graphique de la figure 5, avec une différence d'efforts aérodynamiques longitudinaux maximale entre les deux cotés du fuselage 2 pour une différence des angles de braquage de ces volets 12,12' relativement faible, tout en restant dans la zone pour laquelle l'intensité de la déportance des ensembles aile 11,11' et volet 12,12' est minimale.

Chaque aile 11,11' sur laquelle se trouvent respectivement la première butée et la seconde butée est déterminée selon le sens de rotation du rotor principal 3 et, par suite, le couple rotor $C_R$ induit par cette rotation du rotor principal 3 sur le fuselage 2 de l'aéronef combiné 1.

Selon un premier exemple représenté sur la figure 3, le rotor principal 3 vu de dessus tourne selon le sens horaire et le couple rotor $C_R$ orienté selon le sens antihoraire est alors appliqué sur le fuselage 2 autour de l'axe de rotation du rotor principal 3. Afin d'équilibrer ce couple rotor $C_R$, le dispositif anticouple principal 4, de type rotor arrière, génère un effort transversal $F_{acp}$ dirigé vers la gauche du fuselage 2 selon cette figure 3 et cet effort transversal $F_{acp}$ crée un couple principal s'opposant au couple rotor $C_R$.

Le couple complémentaire généré par les efforts aérodynamiques longitudinaux $F_1,F_2$ doit s'ajouter au couple principal. De fait, le premier effort aérodynamique longitudinal $F_1$ appliqué à une première aile 11 se trouvant du premier côté du fuselage 2 vers lequel n'est pas orienté l'effort transversal $F_{acp}$ du dispositif anticouple principal 4, c'est-à-dire le côté droit du fuselage 2 selon la figure 3, est dirigé vers l'arrière de l'aéronef 1 et le second effort aérodynamique longitudinal $F_2$ appliqué à une seconde aile 11' se trouvant du second côté du fuselage 2 vers lequel est orienté l'effort transversal $F_{acp}$ du dispositif anticouple principal 4, c'est-à-dire le côté gauche du fuselage 2 selon la figure 3, est dirigé vers l'avant de l'aéronef 1.

De fait, le premier volet 12 situé au bord de fuite de la première aile 11 doit avoir un angle de braquage supérieur à l'angle de braquage du second volet 12' situé au bord de fuite de la seconde aile 11'. Conformément à la convention de signe présentée, le premier effort aérodynamique longitudinal $F_1$ doit être positif, c'est-à-dire dirigé de l'avant de l'aéronef 1 vers l'arrière de l'aéronef 1, Dans ce but, le coefficient aérodynamique longitudinal $C_T$ de l'ensemble première aile 11 et premier volet 12 doit être positif, ce qui correspond à un angle de braquage $\delta$ du premier volet 12 supérieur à l'angle de braquage d'inversion $\delta_i$. Le coefficient aérodynamique longitudinal $C_T$ de l'ensemble première aile 11 et premier volet 12 est alors situé dans la zone à fort gradient représentée sur le graphique de la figure 5.

En conséquence, cette première aile 11 comporte la première butée mécanique afin de limiter l'angle de braquage du premier volet 12 au premier angle de braquage maximum $\delta_{max1}$. La seconde aile 11' comporte la seconde butée mécanique afin de limiter l'angle de braquage du second volet 12' au second angle de braquage maximum $\delta_{max2}$.

Selon un second exemple représenté sur la figure 4, le rotor principal 3 vu de dessus tourne selon le sens antihoraire et le couple rotor $C_R$ dans le sens horaire est alors appliqué sur le fuselage 2 autour de l'axe de rotation du rotor principal 3. Dans ce cas, le premier effort aérodynamique longitudinal $F_1$ appliqué à la première aile 11 doit être dirigé vers l'avant de l'aéronef 1 et le second effort aérodynamique longitudinal $F_2$ appliqué à une seconde aile 11' doit être dirigé vers l'arrière de l'aéronef 1.

Alors, le second effort aérodynamique longitudinal $F_2$ doit être positif, de même que le coefficient aérodynamique longitudinal $C_T$ de l'ensemble second aile 11' et second volet 12', l'angle de braquage $\delta$ du second volet 12' doit donc être supérieur à l'angle de braquage d'inversion $\delta_i$. Le coefficient aérodynamique longitudinal $C_T$ de l'ensemble second aile 11' et second volet 12' est alors situé dans cette zone à fort gradient.

Par suite, comme représenté sur la figure 6, la seconde aile 11' comporte la première butée mécanique afin de limiter l'angle de braquage du second volet 12' au premier angle de braquage maximum $\delta_{max1}$. La première aile 11 comporte la seconde butée mécanique afin de limiter l'angle de braquage du premier volet 12 au second angle de braquage maximum $\delta_{max2}$.

De fait, lors d'un vol stationnaire, d'un décollage ou d'un vol à très basse vitesse, les volets 12,12' sont braqués avec un angle important proche de 90° pour réduire au maximum la déportance des ensembles aile 11, 11' et volet 12,12'. Le déplacement des volets 12,12' est alors limité par les première et seconde butées respectivement au premier angle de braquage maximum $\delta_{max1}$ et au second angle de braquage maximum $\delta_{max2}$. Ainsi, un couple complémentaire s'ajoute au couple principal pour équilibrer le couple rotor $C_R$ sans pour autant dégrader la réduction de cette déportance. Par suite, la motorisation de l'aéronef combiné 1 est moins sollicitée, d'une part par cette réduction de cette déportance et d'autre part par la présence de ce couple complémentaire qui permet de soulager le dispositif anticouple principal.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Aéronef combiné (1) situé dans un repère constitué par une direction longitudinale X s'étendant de l'avant dudit aéronef (1) vers l'arrière dudit aéronef (1), une direction d'élévation Z s'étendant de bas en haut perpendiculairement à ladite direction longitudinale X et une direction transversale Y s'étendant de gauche à droite perpendiculairement auxdites directions longitudinale X et d'élévation Z, ledit aéronef (1) comportant :

   - un fuselage (2),
   - un rotor principal (3) situé au dessus dudit fuselage (2), muni d'une pluralité de pales (31) et entrainé en rotation autour d'un axe sensiblement parallèle à ladite direction d'élévation Z et qui sustente ledit aéronef (1) grâce à la portance aérodynamique desdites pales (31),
   - un dispositif anticouple principal (4) générant un couple principal s'opposant au couple rotor $C_R$ généré suite à la rotation dudit rotor principal (3),
   - au moins une aile (11,11') située en dessous dudit rotor principal (3) et s'étendant sensiblement selon ladite direction transversale Y, et
   - au moins deux volets (12,12') situé en dessous dudit rotor principal (3), au moins un volet (12,12') étant situé d'un premier côté dudit fuselage (2) par rapport à ladite direction longitudinale X, au moins un volet (12,12') étant situé d'un second côté dudit fuselage (2) par rapport à ladite direction longitudinale X, chaque volet (12,12') s'étendant sensiblement selon ladite direction transversale Y, chaque volet (12,12') étant lié à ladite au moins une aile (11,11') et mobile vis-à-vis de ladite aile (11, 11'), ladite au moins une aile (11,11') formant avec le ou les volets (12,12') qui sont liés à elle un ensemble aile (11,11') et volet (12,12') de chaque côté dudit fuselage (2),

   lesdits ensembles aile (11,11') et volet (12,12') aptes à générer des efforts aérodynamiques longitudinaux ($F_1,F_2$) dirigés selon ladite direction longitudinale X de part et d'autre dudit fuselage (2) sous l'effet du flux d'air généré en réaction à ladite portance aérodynamique dudit rotor principal (3) et, par suite, aptes à générer un couple complémentaire s'ajoutant audit couple principal afin de s'opposer audit couple rotor $C_R$, lesdits ensembles aile (11,11') et volet (12,12') ayant des profils aérodynamiques identiques et lesdits volets (12,12') étant orientables de façon dissymétrique vis à vis du flux d'air généré en réaction à ladite portance aérodynamique dudit rotor principal (3) de part et d'autre dudit fuselage (2) afin que lesdits coefficients aérodynamiques longitudinaux $C_T$ desdits profils aérodynamiques soient différents de part et d'autre dudit fuselage (2),

   **caractérisé en ce que** l'aéronef est configuré tel que, quand lesdits volets sont orientés de façon dissymétrique, le déplacement de chaque volet (12,12') étant défini par un angle de braquage, un premier angle de braquage $\delta_1$ de chaque volet (12,12') situé dudit premier côté dudit fuselage (2) est supérieur à un angle de braquage d'inversion $\delta_i$ et inférieur à un angle de braquage de décrochage $\delta_D$ alors qu'un second angle de braquage $\delta_2$ de chaque volet (12,12') situé dudit second côté dudit fuselage (2) est inférieur audit angle de braquage d'inversion $\delta_i$, ledit coefficient aérodynamique longitudinal $C_T$ de chaque ensemble aile (11,11') et volet (12,12') étant nul pour un angle de braquage desdits volets (12,12') égal audit angle de braquage d'inversion $\delta_i$, ledit angle de braquage de décrochage $\delta_D$ correspondant à un décrochage aérodynamique de chaque volet (12,12').

2. Aéronef (1) selon la revendication 1,
   **caractérisé en ce que** lesdits efforts aérodynamiques longitudinaux ($F_1,F_2$) sont de sens opposés de part et d'autre dudit fuselage (2).

3. Aéronef (1) selon l'une quelconque des revendications 1 à 2,
   **caractérisé en ce que** ledit premier angle de braquage $\delta_1$ et ledit second angle de braquage $\delta_2$ sont symétriques par rapport audit angle de braquage d'inversion $\delta_i$.

4. Aéronef (1) selon l'une quelconque des revendications 1 à 3,
   **caractérisé en ce que** le premier angle de braquage $\delta_1$ est déterminé avec une marge de sécurité $\Delta\delta_0$ non nulle vis-à-vis dudit angle de braquage de décrochage $\delta_D$ et ledit second angle de braquage $\delta_2$ est déterminé avec une différence des angles de braquage $\Delta\delta_1$ vis-à-vis dudit premier angle de braquage $\delta_1$ tels que $\delta_1 = \delta_D - \Delta\delta_0$ et $\delta_2 = \delta_1 - \Delta\delta_1$.

**5.** Aéronef (1) selon la revendication 4, **caractérisé en ce que** ladite différence des angles de braquage $\Delta\delta_1$ est comprise entre dix et quinze degrés (10 et 15°).

**6.** Aéronef (1) selon l'une quelconque des revendications 4 à 5, **caractérisé en ce que** ladite marge de sécurité $\Delta\delta_0$ est comprise entre deux et cinq degrés (2 et 5°).

**7.** Aéronef (1) selon l'une quelconque des revendications 1 à 6, **caractérisé en ce que**, le déplacement de chaque volet (12,12') étant défini par un angle de braquage, chaque aile (11,11') comporte une butée mécanique limitant le déplacement desdits volets (12,12'), une première butée mécanique étant positionnée sur chaque première aile (11,11') située dudit premier côté dudit fuselage (2) afin de limiter ledit angle de braquage de chaque volet (12,12') situé dudit premier côté dudit fuselage (2) à un premier angle de braquage maximum $\delta_{max1}$ et une seconde butée mécanique étant positionnée sur chaque seconde aile (11,11') située dudit second côté dudit fuselage (2) afin de limiter ledit angle de braquage de chaque volet (12,12') situé dudit second côté dudit fuselage (2) à un second angle de braquage maximum $\delta_{max2}$.

**8.** Aéronef (1) selon la revendication 7, **caractérisé en ce que** ladite première butée est positionnée avec une marge de sécurité $\Delta\delta_0$ vis-à-vis d'un angle de braquage de décrochage $\delta_D$ dudit volet (12,12') et ladite seconde butée mécanique est positionnée avec une différence des angles de braquage $\Delta\delta_1$ vis-à-vis de ladite première butée, ledit angle de braquage de décrochage $\delta_D$ correspondant à un décrochage aérodynamique de chaque volet (12,12').

**9.** Aéronef (1) selon l'une quelconque des revendications 1 à 8, **caractérisé en ce que** ledit premier côté et ledit second côté dudit fuselage (2) sont déterminés selon le sens de rotation dudit rotor principal (3) afin que ledit couple complémentaire s'oppose audit couple rotor $C_R$.

**10.** Aéronef (1) selon l'une quelconque des revendications 1 à 9, **caractérisé en ce que** chaque volet (12,12') a une longueur de corde comprise entre 20 et 35% de la longueur de corde de chaque aile (11,11').

**11.** Aéronef (1) selon l'une quelconque des revendications 1 à 10, **caractérisé en ce que**, chaque volet (12,12') étant mobile en rotation vis à vis de chaque aile (11,11'), le centre de rotation d'un volet (12,12') est situé à l'intérieur de ladite aile (11,11') et proche de l'intrados de ladite aile (11,11').

**12.** Aéronef (1) selon l'une quelconque des revendications 1 à 11, **caractérisé en ce que** ledit aéronef (1) comporte une seule aile (11,11') qui est une aile aérodynamique commune s'étendant de part et d'autre de la direction longitudinale X.

**13.** Aéronef (1) selon l'une quelconque des revendications 1 à 12, **caractérisé en ce que** ledit aéronef (1) comporte deux ailes (11,11') qui sont deux ailes aérodynamiques distinctes, une première aile (11) étant située d'un premier côté dudit du fuselage (2) selon ladite direction longitudinale X et une seconde aile (11') étant située d'un second côté dudit fuselage (2) selon ladite direction longitudinale X.

**14.** Aéronef (1) selon l'une quelconque des revendications 1 à 13, **caractérisé en ce que**, ledit aéronef (1) comportant au moins une hélice propulsive (5,5') positionnée sur chaque aile (11,11'), chaque volet (12,12') est positionné sur chaque aile (11,11') hors d'une zone affectée par un flux d'air d'une hélice propulsive (5,5').

**15.** Procédé de génération d'un couple complémentaire pour un aéronef combiné (1), ledit aéronef (1) étant situé dans un repère constitué par une direction longitudinale X s'étendant de l'avant dudit aéronef (1) vers l'arrière dudit aéronef (1), une direction d'élévation Z s'étendant de bas en haut perpendiculairement à ladite direction longitudinale X et une direction transversale Y s'étendant de gauche à droite perpendiculairement auxdites directions longitudinale X et d'élévation Z, ledit aéronef (1) comportant :

- un fuselage (2),
- un rotor principal (3) situé au dessus dudit fuselage (2), muni d'une pluralité de pales (31) et entrainé en rotation autour d'un axe sensiblement parallèle à ladite direction d'élévation Z et qui sustente ledit aéronef (1) grâce à la portance aérodynamique desdites pales (31),
- un dispositif anticouple principal (4) générant un couple principal s'opposant au couple rotor $C_R$ généré suite à la rotation dudit rotor principal (3),
- au moins une aile (11,11') située en dessous dudit rotor principal (3) et s'étendant sensiblement selon ladite direction transversale Y, et
- au moins deux volets (12,12') situé en dessous dudit rotor principal (3), au moins un volet (12,12') étant situé d'un premier côté dudit fuselage (2) par rapport à ladite direction longitudinale X, au moins un volet (12,12') étant situé d'un second côté dudit fuselage (2) par rapport à ladite direction longitudinale X, chaque volet (12,12') s'étendant sensiblement selon ladite direction transversale Y, chaque volet (12,12') étant lié à une aile (11,11') et mobile vis-à-vis de ladite aile (11,11'), chaque aile (11,11') formant avec le ou les volets (12,12') qui sont liés à elle un ensemble aile (11,11') et volet (12,12') de chaque côté dudit fuselage (2),

lesdits ensembles aile (11,11') et volet (12,12') générant des efforts aérodynamiques longitudinaux (F$_1$,F$_2$) dirigés selon ladite direction longitudinale X de part et d'autre dudit fuselage (2) sous l'effet du flux d'air généré en réaction à ladite portance aérodynamique dudit rotor principal (3) et, par suite, générant un couple complémentaire s'ajoutant audit couple principal afin de s'opposer audit couple rotor C$_R$, lesdits ensembles aile (11,11') et volet (12,12') ayant des profils aérodynamiques identiques et lesdits volets (12,12') étant orientés de façon dissymétrique vis à vis du flux d'air généré en réaction à ladite portance aérodynamique dudit rotor principal (3) de part et d'autre dudit fuselage (2) afin que lesdits coefficients aérodynamiques longitudinaux C$_T$ desdits profils aérodynamiques soient différents de part et d'autre dudit fuselage (2), **caractérisé en ce que** ledit procédé comporte les étapes suivantes :

- une étape de définition d'un angle de braquage pour le déplacement de chaque volet (12,12'), un premier angle de braquage $\delta_1$ de chaque volet (12,12') situé dudit premier côté dudit fuselage (2) étant supérieur à un angle de braquage d'inversion $\delta_i$ et inférieur à un angle de braquage de décrochage $\delta_D$ alors qu'un second angle de braquage $\delta_2$ de chaque volet (12,12') situé dudit second côté dudit fuselage (2) est inférieur audit angle de braquage d'inversion $\delta_i$, ledit coefficient aérodynamique longitudinal C$_T$ de chaque ensemble aile (11,11') et volet (12,12') étant nul pour un angle de braquage desdits volets (12,12') égal audit angle de braquage d'inversion $\delta_i$, ledit angle de braquage de décrochage $\delta_D$ correspondant à un décrochage aérodynamique de chaque volet (12,12') et
- une étape de déplacement de chaque volet respectivement selon ledit angle de braquage $\delta_1$, $\delta_2$.

16. Procédé selon la revendication 15,
**caractérisé en ce qu'**au cours de ladite étape de définition d'un angle de braquage,

- on définit ledit premier angle de braquage $\delta_1$ avec une marge de sécurité $\Delta\delta_0$ non nulle vis-à-vis dudit angle de braquage de décrochage

$\delta_D$ et
- on définit ledit second angle de braquage $\delta_2$ avec une différence des angles de braquage $\Delta\delta_1$ vis-à-vis dudit premier angle de braquage $\delta_1$ tels que $\delta_1 = \delta_D - \Delta\delta_0$ et $\delta_2 = \delta_1 - \Delta\delta_1$.

**Patentansprüche**

1. Kombiniertes Luftfahrzeug (1) in einem Koordinatensystem bestehen aus einer Längsrichtung X, die sich von der Vorderseite des Luftfahrzeugs (1) zur Hinterseite des Luftfahrzeugs (1) erstreckt, einer Höhenrichtung Z, die sich von unten nach oben senkrecht zu der Längsrichtung X erstreckt, und einer Querrichtung Y, die sich von links nach rechts senkrecht zu der Längsrichtung X und der Höhenrichtung Z erstreckt, wobei das Luftfahrzeug (1) aufweist:

- einen Rumpf (2),
- einen Hauptrotor (3), der über dem Rumpf (2) angeordnet ist und eine Mehrzahl von Rotorblättern (31) aufweist, und zu einer Drehbewegung um eine Achse angetrieben wird, die im Wesentlichen parallel zu der Höhenrichtung Z ist, und der das Luftfahrzeug (1) aufgrund des aerodynamischen Auftriebs der Rotorblätter (31) in die Luft hebt,
- eine Hauptgegendrehmomentvorrichtung (4), die ein Hauptdrehmoment erzeugt, das zu dem Rotordrehmoment C$_R$ entgegengesetzt ist, das infolge der Rotation des Hauptrotors (3) erzeugt wird,
- mindestens einen Flügel (11, 11'), der unterhalb des Hauptrotors (3) angeordnet ist, und sich im Wesentlichen entlang der Querrichtung Y erstreckt, und
- mindestens zwei Klappen (12, 12'), die unterhalb des Hauptrotors (3) angeordnet sind, wobei mindestens eine Klappe (12, 12') auf einer ersten Seite des Rumpfes (2) bezüglich der Längsrichtung X angeordnet ist, wobei mindestens eine Klappe (12, 12') auf einer zweiten Seite des Rumpfes (2) bezüglich der Längsrichtung X angeordnet ist, wobei jede Klappe (12, 12') sich im Wesentlichen längs der Querrichtung Y erstreckt, wobei jede Klappe (12, 12') mit dem mindestens einen Flügel (11, 11') verbunden ist und gegenüber dem Flügel (11, 11') beweglich ist, wobei der mindestens eine Flügel (11, 11') mit der Klappe oder mit den Klappen (12, 12'), die mit ihm verbunden sind, eine Einheit aus Flügel (11, 11') und Klappe (12, 12') zu beiden Seiten des Rumpfes (2) bildet,

wobei die Einheiten aus Flügel (11, 11') und Klappe (12, 12') aerodynamische Längskräfte (F$_1$, F$_2$) erzeugen können, die entlang der Längsrichtung X zu beiden Seiten des Rumpfes (2) gerichtet sind, unter der Einwirkung der Luftströmung, die in Reaktion auf den aerodynamischen Auftrieb des Hauptrotors (3) erzeugt wird, und sodann ein ergänzendes Drehmoment erzeugen können, das zu dem Hauptdrehmoment hinzugefügt wird, um dem Rotordrehmoment $C_R$ entgegenzuwirken, wobei die Einheiten aus Flügel (11, 11') und Klappe (12, 12') identische aerodynamische Profile aufweisen, und wobei die Klappen (12, 12') asymmetrisch gegenüber der Luftströmung ausrichtbar sind, die erzeugt wird in Reaktion auf den aerodynamischen Auftrieb des Hauptrotors (3) zu beiden Seiten des Rumpfes (2), sodass die aerodynamischen Koeffizienten $C_T$ in Längsrichtung der aerodynamischen Profile zu beiden Seiten des Rumpfes (2) unterschiedlich sind, **dadurch gekennzeichnet, dass** das Luftfahrzeug so ausgebildet ist, dass, wenn die Klappen asymmetrisch ausgerichtet sind, die Bewegung einer jeden Klappe (12, 12') durch einen Drehwinkel definiert ist, wobei ein erster Drehwinkel $\delta_1$ einer jeden Klappe (12, 12'), die auf der ersten Seite des Rumpfes (2) gelegen ist, größer ist als ein umgekehrter Drehwinkel $\delta_i$ und kleiner ist als ein Strömungsabriss-Drehwinkel $\delta_D$, während ein zweiter Drehwinkel $\delta_2$ einer jeden Klappe (12, 12'), die auf der zweiten Seite des Rumpfes (2) gelegen ist, kleiner ist als der umgekehrte Drehwinkel $\delta_i$, wobei der aerodynamische Koeffizient $C_T$ in Längsrichtung einer jeden Einheit aus Flügel (11, 11') und Klappe (12, 12') Null ist für einen Drehwinkel der Klappe (12, 12'), der gleich dem Umkehrdrehwinkel $\delta_i$ ist, wobei der Strömungsabriss-Drehwinkel $\delta_D$ einem aerodynamischen Strömungsabriss einer jeden Klappe (12, 12') entspricht.

2. Luftfahrzeug (1) nach Anspruch 1, **dadurch gekennzeichnet, dass** die aerodynamischen Kräfte in Längsrichtung ($F_1$, $F_2$) zu beiden Seiten des Rumpfes (2) entgegengesetzte Richtungen haben.

3. Luftfahrzeug (1) nach einem der Ansprüche 1 bis 2, **dadurch gekennzeichnet, dass** der erste Drehwinkel $\delta_1$ und der zweite Drehwinkel $\delta_2$ symmetrisch bezüglich des Umkehrdrehwinkels $\delta_i$ sind.

4. Luftfahrzeug (1) nach einem der Ansprüche 1 bis 3, **dadurch gekennzeichnet, dass** der erste Drehwinkel $\delta_1$ mit einer Sicherheitsmarge $\Delta\delta_0$ ungleich Null gegenüber dem Strömungsabriss-Drehwinkel $\delta_D$ bestimmt ist, und der zweite Drehwinkel $\delta_2$ mit einer Differenz der Drehwinkel $\Delta\delta_1$ gegenüber dem ersten Drehwinkel $\delta_1$ bestimmt ist, derart, dass gilt:

$$\delta_1 = \delta_D - \Delta\delta_0 \text{ und } \delta_2 = \delta_1 - \Delta\delta_1.$$

5. Luftfahrzeug (1) nach Anspruch 4, **dadurch gekennzeichnet, dass** die Differenz der Drehwinkel $\Delta\delta_1$ zwischen zehn und fünfzehn Grad (10 und 15°) liegt.

6. Luftfahrzeug (1) nach einem der Ansprüche 4 bis 5, **dadurch gekennzeichnet, dass** die Sicherheitsmarge $\Delta\delta_0$ zwischen zwei und fünf Grad (2 und 5°) liegt.

7. Luftfahrzeug (1) nach einem der Ansprüche 1 bis 6, **dadurch gekennzeichnet, dass** die Bewegung einer jeden Klappe (12, 12') durch einen Drehwinkel definiert wird, wobei jeder Flügel (11, 11') einen mechanischen Anschlag aufweist, der die Bewegung der Klappen (12, 12') begrenzt, wobei ein erster mechanischer Anschlag auf jedem ersten Flügel (11, 11'), der auf der ersten Seite des Rumpfes (2) angeordnet ist, positioniert ist, um den Drehwinkel einer jeden Klappe (12, 12'), die auf der ersten Seite des Rumpfes (2) gelegen ist, auf einen ersten maximalen Drehwinkel $\delta_{max1}$ zu begrenzen, und ein zweiter mechanischer Anschlag auf jedem zweiten Flügel (11, 11'), der auf der zweiten Seite des Rumpfes (2) angeordnet ist, positioniert ist, um den Drehwinkel einer jeden Klappe (12, 12'), die auf der zweiten Seite des Rumpfes (2) gelegen ist, auf einen zweiten maximalen Drehwinkel $\delta_{max2}$ zu begrenzen.

8. Luftfahrzeug (1) nach Anspruch 7, **dadurch gekennzeichnet, dass** der erste Anschlag mit einer Sicherheitsmarge $\Delta\delta_0$ gegenüber einem Strömungsabriss-Drehwinkel $\delta_D$ der Klappe (12, 12') positioniert ist, und der zweite mechanische Anschlag mit einer Differenz von Drehwinkeln $\Delta\delta_1$ gegenüber dem ersten Anschlag positioniert ist, wobei der Strömungsabriss-Drehwinkel $\delta_D$ einen aerodynamischen Strömungsabriss einer jeden Klappe (12, 12') entspricht.

9. Luftfahrzeug (1) nach einem der Ansprüche 1 bis 8, **dadurch gekennzeichnet, dass** die erste Seite und die zweite Seite des Rumpfes (2) gemäß der Drehrichtung des Hauptrotors (3) bestimmt sind, damit das Gegendrehmoment zu dem Rotordrehmoment $C_R$ entgegengesetzt ist.

10. Luftfahrzeug (1) nach einem der Ansprüche 1 bis 9, **dadurch gekennzeichnet, dass** jede Klappe (12, 12') eine Länge der Profilsehne aufweist, die zwischen 20 und 35 % der Länge der Profilsehne eines jeden Flügels (11, 11') liegt.

11. Luftfahrzeug (1) nach einem der Ansprüche 1 bis 10, **dadurch gekennzeichnet, dass** jede Klappe (12, 12') gegenüber jedem Flügel (11, 11') drehbeweglich ist, wobei das Rotationszentrum einer Klappe (12, 12') im Inneren des Flügels (11, 11') und nahe der Druckseite des Flügels (11, 11') gelegen ist.

**12.** Luftfahrzeug (1) nach einem der Ansprüche 1 bis 11, **dadurch gekennzeichnet, dass** das Luftfahrzeug (1) einen einzigen Flügel (11, 11') aufweist, der ein gemeinsamer aerodynamischer Flügel ist, der sich zu beiden Seiten der Längsrichtung X erstreckt.

**13.** Luftfahrzeug (1) nach einem der Ansprüche 1 bis 12, **dadurch gekennzeichnet, dass** das Luftfahrzeug (1) zwei Flügel (11, 11') aufweist, die zwei getrennte aerodynamische Flügel sind, wobei ein erster Flügel (11) auf einer ersten Seite des Rumpfes (2) bezüglich der Längsrichtung X angeordnet ist, und ein zweiter Flügel (11') auf einer zweiten Seite des Rumpfes (2) gegenüber der Längsrichtung X angeordnet ist.

**14.** Luftfahrzeug (1) nach einem der Ansprüche 1 bis 13, **dadurch gekennzeichnet, dass** das Luftfahrzeug (1) mindestens einen Vortriebspropeller (5, 5') aufweist, der auf jedem Flügel (11, 11') angeordnet ist, wobei jede Klappe (12, 12') auf jedem Flügel (11, 11') außerhalb eines Bereichs angeordnet ist, auf den eine Luftströmung eines Vortriebspropellers (5, 5') trifft.

**15.** Verfahren zur Erzeugung eines Gegendrehmoments für ein kombiniertes Luftfahrzeugs (1), welches sich in einem Koordinatensystem befindet, bestehend aus einer Längsrichtung X, die sich von der Vorderseite des Luftfahrzeugs (1) zur Hinterseite des Luftfahrzeugs (1) erstreckt, einer Höhenrichtung Z, die sich von unten nach oben senkrecht zu der Längsrichtung X erstreckt, und einer Querrichtung Y, die sich von links nach rechts senkrecht zu der Längsrichtung X und der Höhenrichtung Z erstreckt, wobei das Luftfahrzeug (1) aufweist:

- einen Rumpf (2),
- einen Hauptrotor (3), der über dem Rumpf (2) angeordnet ist und eine Mehrzahl von Rotorblättern (31) aufweist, und zu einer Drehbewegung um eine Achse angetrieben wird, die im Wesentlichen parallel zu der Höhenrichtung Z ist, und der das Luftfahrzeug (1) aufgrund des aerodynamischen Auftriebs der Rotorblätter (31) in die Luft hebt,
- eine Hauptgegendrehmomentvorrichtung (4), die ein Hauptdrehmoment erzeugt, das zu dem Rotordrehmoment $C_R$ entgegengesetzt ist, das infolge der Rotation des Hauptrotors (3) erzeugt wird,
- mindestens einen Flügel (11, 11'), der unterhalb des Hauptrotors (3) angeordnet ist, und sich im Wesentlichen entlang der Querrichtung Y erstreckt, und
- mindestens zwei Klappen (12, 12'), die unterhalb des Hauptrotors (3) angeordnet sind, wobei mindestens eine Klappe (12, 12') auf einer ersten Seite des Rumpfes (2) bezüglich der Längsrichtung X angeordnet ist, wobei mindestens eine Klappe (12, 12') auf einer zweiten Seite des Rumpfes (2) bezüglich der Längsrichtung X angeordnet ist, wobei jede Klappe (12, 12') sich im Wesentlichen längs der Querrichtung Y erstreckt, wobei jede Klappe (12, 12') mit einen Flügel (11, 11') verbunden ist und gegenüber dem Flügel (11, 11') beweglich ist, wobei jeder Flügel (11, 11') mit der Klappe oder mit den Klappen (12, 12'), die mit ihm verbunden sind, eine Einheit aus Flügel (11, 11') und Klappe (12, 12') zu beiden Seiten des Rumpfes (2) bildet,

wobei die Einheiten aus Flügel (11, 11') und Klappe (12, 12') aerodynamische Längskräfte ($F_1$, $F_2$) erzeugen, die entlang der Längsrichtung X zu beiden Seiten des Rumpfes (2) gerichtet sind, unter der Einwirkung der Luftströmung, die in Reaktion auf den aerodynamischen Auftrieb des Hauptrotors (3) erzeugt wird, und sodann ein ergänzendes Drehmoment erzeugen, das zu dem Hauptdrehmoment hinzugefügt wird, um dem Rotordrehmoment $C_R$ entgegenzuwirken, wobei die Einheiten aus Flügel (11, 11') und Klappe (12, 12') identische aerodynamische Profile aufweisen, und wobei die Klappen (12, 12') asymmetrisch gegenüber der Luftströmung ausrichtbar sind, die erzeugt wird in Reaktion auf den aerodynamischen Auftrieb des Hauptrotors (3) zu beiden Seiten des Rumpfes (2), sodass die aerodynamischen Koeffizienten $C_T$ in Längsrichtung der aerodynamischen Profile zu beiden Seiten des Rumpfes (2) unterschiedlich sind,
**dadurch gekennzeichnet, dass** das Verfahren folgende Schritte aufweist:

- einen Schritt der Definition eines Drehwinkels für die Bewegung einer jeden Klappe (12, 12'), wobei ein erster Drehwinkel $\delta_1$ einer jeden Klappe (12, 12'), die auf der ersten Seite des Rumpfes (2) angeordnet ist, größer ist als ein Umkehrdrehwinkel $\delta_i$ und kleiner als ein Strömungsabriss-Drehwinkel $\delta_D$, während ein zweiter Drehwinkel $\delta_2$ einer jeden Klappe (12, 12'), die auf der zweiten Seite des Rumpfes (2) angeordnet ist, kleiner ist als der Umkehrdrehwinkel $\delta_i$, wobei der aerodynamische Koeffizient $C_T$ in Längsrichtung einer jeden Einheit aus Flügel (11, 11') und Klappe (12, 12') gleich Null ist für einen Drehwinkel der Klappen (12, 12'), der gleich dem Umkehrdrehwinkel $\delta_i$ ist, wobei der Strömungsabriss-Drehwinkel $\delta_D$ einem aerodynamischen Strömungsabriss einer jeden Klappe (12, 12') entspricht, und

- einen Schritt der Bewegung jeder Klappe jeweils mit dem Drehwinkel $\delta_1$ bzw. $\delta_2$.

**16.** Verfahren nach Anspruch 15,

**dadurch gekennzeichnet, dass** während des Schrittes der Definition eines Drehwinkels:

- der erste Drehwinkel $\delta_1$ mit einer Sicherheitsmarge $\Delta\delta_0$ ungleich Null gegenüber dem Strömungsabriss-Drehwinkel $\delta_D$ definiert wird, und
- der zweite Drehwinkel $\delta_2$ mit einer Differenz von Drehwinkeln $\Delta\delta_1$ gegenüber dem ersten Drehwinkel $\delta_1$ definiert wird, derart, dass gilt: $\delta_1 = \delta_D - \Delta\delta_0$ und $\delta_2 = \delta_1 - \Delta\delta_1$.

**Claims**

1. A compound aircraft (1) located within a reference frame constituted by a longitudinal direction X extending from the front of said aircraft (1) towards the rear of said aircraft (1), an elevation direction Z extending upwards perpendicularly to said longitudinal direction X, and a transverse direction Y extending from left to right perpendicularly to said longitudinal direction X and elevation direction Z, said aircraft (1) comprising:

   - a fuselage (2),
   - a main rotor (3) located above said fuselage (2), provided with a plurality of blades (31) and driven in rotation about an axis substantially parallel to said elevation direction Z and which provides said aircraft (1) with lift as a result of the aerodynamic lift of said blades (31),
   - a main anti-torque device (4) generating a main torque which opposes the rotor torque $C_R$ generated as a result of the rotation of said main rotor (3),
   - at least one wing (11, 11') located beneath said main rotor (3) and extending substantially in said transverse direction Y, and
   - at least two flaps (12, 12') located beneath said main rotor (3), at least one flap (12, 12') being located on a first side of said fuselage (2) relative to said longitudinal direction X, at least one flap (12, 12') being located on a second side of said fuselage (2) relative to said longitudinal direction X, each flap (12, 12') extending substantially in said transverse direction Y, each flap (12, 12') being connected to said at least one wing (11, 11') and mobile with respect to said wing (11, 11'), said at least one wing (11, 11') forming with the flap or flaps (12, 12') which are connected thereto a wing (11, 11') and flap (12, 12') assembly on each side of said fuselage (2),

   said wing (11, 11') and flap (12, 12') assemblies capable of generating longitudinal aerodynamic forces ($F_1$, $F_2$) directed in said longitudinal direction X on either side of said fuselage (2) under the effect of the airflow generated in reaction to said aerodynamic lift of said main rotor (3) and, consequently, capable of generating a complementary torque added to said main torque in order to oppose said rotor torque $C_R$, said wing (11, 11') and flap (12, 12') assemblies having identical aerodynamic profiles and said flaps (12, 12') being orientable asymmetrically with respect to the airflow generated as a reaction to said aerodynamic lift of said main rotor (3) on either side of said fuselage (2) so that said longitudinal aerodynamic coefficients $C_T$ of said aerodynamic profiles are different on either side of said fuselage (2),
**characterised in that** the aircraft is configured such that, when said flaps are oriented asymmetrically, the displacement of each flap (12, 12') being defined by a deflection angle, a first deflection angle $\delta_1$ of each flap (12, 12') which is located on said first side of said fuselage (2) is greater than an inversion deflection angle $\delta_i$ and less than a stall deflection angle $\delta_D$ while a second deflection angle $\delta_2$ of each flap (12, 12') located on said second side of said fuselage (2) is less than said inversion deflection angle $\delta_i$, longitudinal aerodynamic coefficient $C_T$ of each wing (11, 11') and flap (12, 12') assembly being zero for a deflection angle of said flaps (12, 12') which is equal to said inversion deflection angle $\delta_i$, said stall deflection angle $\delta_D$ corresponding to an aerodynamic stall of each flap (12, 12').

2. An aircraft (1) according to Claim 1, **characterised in that** said longitudinal aerodynamic forces ($F_1$, $F_2$) are of opposite directions on either side of said fuselage (2).

3. An aircraft (1) according to any one of Claims 1 to 2, **characterised in that** said first deflection angle $\delta_1$ and said second deflection angle $\delta_2$ are symmetrical relative to said inversion deflection angle $\delta_i$.

4. An aircraft (1) according to any one of Claims 1 to 3, **characterised in that** the first deflection angle $\delta_1$ is determined with a safety margin $\Delta\delta_0$ other than zero with respect to said stall deflection angle $\delta_D$, and said second deflection angle $\delta_2$ is determined with a difference of the deflection angles $\Delta\delta_1$, with respect to said first deflection angle $\delta_1$ such that $\delta_1 = \delta_D - \Delta\delta_0$ and $\delta_2 = \delta_1 - \Delta\delta_1$.

5. An aircraft (1) according to Claim 4, **characterised in that** said difference in the deflection angles $\Delta\delta_1$, is of between ten and fifteen degrees (10 and 15°).

6. An aircraft (1) according to any one of Claims 4 to 5, **characterised in that** said safety margin $\Delta\delta_0$ is of between two and five degrees (2 and 5°).

7. An aircraft (1) according to any one of Claims 1 to 6, **characterised in that**, the displacement of each flap (12, 12') being defined by a deflection angle, each wing (11, 11') comprises a mechanical abutment limiting the displacement of said flaps (12, 12'), a first mechanical abutment being positioned on each first wing (11, 11') which is located on said first side of said fuselage (2) in order to limit said deflection angle of each flap (12, 12') which is located on said first side of said fuselage (2) to a first maximum deflection angle $\delta_{max1}$ and a second mechanical abutment being positioned on each second wing (11, 11') which is located on said second side of said fuselage (2) in order to limit said deflection angle of each flap (12, 12') which is located on said second side of said fuselage (2) to a second maximum deflection angle $\delta_{max2}$.

**8.** An aircraft (1) according to Claim 7,
**characterised in that** said first abutment is positioned with a safety margin $\Delta\delta_0$ with respect to a stall deflection angle $\delta_D$ of said flap (12, 12'), and said second mechanical abutment is positioned with a difference of the deflection angles $\Delta\delta_1$ with respect to said first abutment, said stall deflection angle $\delta_D$ corresponding to an aerodynamic stall of each flap (12, 12').

**9.** An aircraft (1) according to any one of Claims 1 to 8,
**characterised in that** said first side and said second side of said fuselage (2) are determined according to the direction of rotation of said main rotor (3) in order that said complementary torque opposes said rotor torque $C_R$.

**10.** An aircraft (1) according to any one of Claims 1 to 9,
**characterised in that** each flap (12, 12') has a chord length of between 20 and 35% of the chord length of each wing (11, 11').

**11.** An aircraft (1) according to any one of Claims 1 to 10,
**characterised in that**, each flap (12, 12') being mobile in rotation with respect to each wing (11, 11'), the centre of rotation of a flap (12, 12') is located within said wing (11, 11') and close to the lower surface of said wing (11, 11').

**12.** An aircraft (1) according to any one of Claims 1 to 11,
**characterised in that** said aircraft (1) comprises a single wing (11, 11'), which is a common aerodynamic wing extending on either side of the longitudinal direction X.

**13.** An aircraft (1) according to any one of Claims 1 to 12,
**characterised in that** said aircraft (1) comprises two wings (11, 11'), which are two distinct aerodynamic wings, a first wing (11) being located on a first side of said fuselage (2) in said longitudinal direction X and a second wing (11') being located on a second side of said fuselage (2) in said longitudinal direction X.

**14.** An aircraft (1) according to any one of Claims 1 to 13,
**characterised in that**, said aircraft (1) comprising at least one pusher propeller (5, 5') positioned on each wing (11, 11'), each flap (12, 12') is positioned on each wing (11, 11') outside a zone affected by an airflow of a pusher propeller (5, 5').

**15.** A method for generating a complementary torque for a compound aircraft (1), said aircraft (1) being located within a reference frame constituted by a longitudinal direction X extending from the front of said aircraft (1) towards the rear of said aircraft (1), an elevation direction Z extending upwards perpendicularly to said longitudinal direction X, and a transverse direction Y extending from left to right perpendicularly to said longitudinal direction X and elevation direction Z, said aircraft (1) comprising:

- a fuselage (2),
- a main rotor (3) located above said fuselage (2), provided with a plurality of blades (31) and driven in rotation about an axis substantially parallel to said elevation direction Z and which provides said aircraft (1) with lift as a result of the aerodynamic lift of said blades (31),
- a main anti-torque device (4) generating a main torque which opposes the rotor torque $C_R$ generated as a result of the rotation of said main rotor (3),
- at least one wing (11, 11') located beneath said main rotor (3) and extending substantially in said transverse direction Y, and
- at least two flaps (12, 12') located beneath said main rotor (3), at least one flap (12, 12') being located on a first side of said fuselage (2) relative to said longitudinal direction X, at least one flap (12, 12') being located on a second side of said fuselage (2) relative to said longitudinal direction X, each flap (12, 12') extending substantially in said transverse direction Y, each flap (12, 12') being connected to a wing (11, 11') and mobile with respect to said wing (11, 11'), each wing (11, 11') forming with the flap or flaps (12, 12') which are connected thereto a wing (11, 11') and flap (12, 12') assembly on each side of said fuselage (2),

said wing (11, 11') and flap (12, 12') assemblies generating longitudinal aerodynamic forces ($F_1$, $F_2$) directed in said longitudinal direction X on either side of said fuselage (2) under the effect of the airflow generated in reaction to said aerodynamic lift of said main rotor (3) and, consequently, generating a complementary torque added to said main torque in order to oppose said rotor torque $C_R$, said wing (11, 11') and flap (12, 12') assemblies having identical aerodynamic profiles and said flaps (12, 12') being oriented asymmetrically with respect to the airflow generated as a reaction to said aerodynamic lift of said main rotor (3) on either side of said fuselage (2) so that longitudinal aerodynamic coefficients $C_T$ of said aerodynamic profiles are different on either side of said fuselage (2),

**characterised in that** said method comprises the following steps:

- a step of defining a deflection angle for the displacement of each flap (12, 12'), a first deflection angle $\delta_1$ of each flap (12, 12') which is located on said first side of said fuselage (2) being greater than an inversion deflection angle $\delta_i$ and less than a stall deflection angle $\delta_D$, while a second deflection angle $\delta_2$ of each flap (12, 12') located on said second side of said fuselage (2) is less than said inversion deflection angle $\delta_i$, said longitudinal aerodynamic coefficient $C_T$ of each wing (11, 11') and flap (12, 12') assembly being zero for a deflection angle of said flaps (12, 12') which is equal to said inversion deflection angle $\delta_i$, said stall deflection angle $\delta_D$ corresponding to an aerodynamic stall of each flap (12, 12), and

- a step of displacing each flap respectively according to said deflection angle $\delta_1$, $\delta_2$.

16. A method according to Claim 15,
**characterised in that** during said step of defining a deflection angle,

- said first deflection angle $\delta_1$ is defined with a safety margin $\Delta\delta_0$ other than zero with respect to said stall deflection angle $\delta_D$, and
- said second deflection angle $\delta_2$ is defined with a difference of the deflection angles $\Delta\delta_1$ with respect to said first deflection angle $\delta_1$ such that $\delta_1 = \delta_D - \Delta\delta_0$ and $\delta_2 = \delta_1 - Abi.$

Fig.1

Fig.2

Fig.3

Fig.4

# Fig.5

# Fig.6

**EP 3 118 112 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2575886 A
- US 20080272244 A
- US 4928907 A
- GB 570455 A
- US 20060157614 A
- JP 2003220999 A
- US 20050151001 A